# EUROPEAN PATENT SPECIFICATION

(11) **EP 2 940 820 B1**
(45) Date of publication and mention of the grant of the patent: **23.11.2016**
(21) Application number: 15156295.6
(22) Date of filing: 24.02.2015
(51) Int. Cl.: H02H 3/087, H01H 9/54, H01H 33/59, H02H 3/02

(54) **Apparatus and method for interrupting direct current**
Vorrichtung und Verfahren zur Unterbrechung von Gleichstrom
Appareil et procédé pour interrompre un courant continu

(30) Priority: 31.03.2014 JP 2014072371
(43) Date of publication of application: 04.11.2015
(73) Proprietor: Kabushiki Kaisha Toshiba, Tokyo 105-8001 (JP)
(72) Inventor: Niwa, Yoshimitsu, Tokyo, 105-8001 (JP); Sato, Junichi, Tokyo, 105-8001 (JP); Asari, Naoki, Tokyo, 105-8001 (JP); Kubota, Nobutaka, Tokyo, 105-8001 (JP)
(74) Representative: Hoffmann Eitle

(56) References cited:
- EP-A1- 2 523 204
- US-A- 3 737 724
- US-A- 5 517 378
- US-A1- 2002 171 983
- US-A1- 2014 078 622

## Description

### FIELD

Embodiments described herein relate generally to a direct-current interrupting apparatus and a direct-current interrupting method used for interrupting a direct current.

### BACKGROUND

In transmitting power, generally, a system needs to have a function of interrupting a transmitted current in order to prepare for an accident or the like. An interrupter is used for this purpose, but in transmission of a direct current there is difficulty because there is no current zero point in the transmitted direct current, the difficulty not arising in the case of interrupting an alternating current.

A direct-current interrupter includes, as an existing basic configuration, for example, a current-carrying path having a switch and a current-interrupting path connected in parallel to the current-carrying path and capable of gradually decreasing current. At normal time, the switch on the current-carrying path is closed to pass current through the current-carrying path. At accident time, the current-interrupting path is temporarily made to conduct into a state to allow current to pass therethrough at accident time instead of the current-carrying path. On the other hand, the switch is opened not to conduct the current through the current-carrying path and thereby commutes the current at accident time to the side of the current-interrupting path, and thereafter the current through the current-interrupting path is immediately limited to complete interruption.

The current-carrying path of the direct-current interrupter is more preferable as it is smaller in electric resistance. This is because the electric resistance leads to power loss at normal time. Further, faster switching from the current-carrying path to the current-interrupting path of the direct-current interrupter is more preferable. This is because as the switching is performed later, the current at accident time increases more and the value of the current to be interrupted by the current-interrupting path becomes larger. If the current to be interrupted becomes larger, a current-interrupting path with a larger capacity is required, leading to an increase in size of the interrupter.

Similar direct-current interrupters are disclosed in the following documents : EP2523204, US5517378, US2002/0171983, US2014/0078622, and US 3737724.

### SUMMARY

According to the aspects of the present invention there is provided an apparatus and a method for interrupting a direct current according to Claim 1 and claim 12, respectively.

### BRIEF DESCRIPTION OF THE DRAWINGS

Fig. 1 is a configuration diagram illustrating a direct-current interrupter in Embodiment 1.
Fig. 2 is a configuration diagram illustrating a modification example of the direct-current interrupter illustrated in Fig. 1.
Fig. 3 is a cross-sectional view schematically illustrating a vacuum valve being an element to be included in a switch 12 illustrated in Fig. 1, Fig. 2.
Figs. 4A, 4B, 4C, 4D are standard timing charts for explaining operations of the direct-current interrupter illustrated in Fig. 1.
Figs. 5A, 5B, 5C, 5D are altered timing charts (Embodiment 2) for explaining the operations of the direct-current interrupter illustrated in Fig. 1.
Figs. 6A, 6B, 6C, 6D are altered timings charts (Embodiment 3) for explaining the operations of the direct-current interrupter illustrated in Fig. 1, different from those illustrated in Figs. 5A, 5B, 5C, 5D.
Figs. 7A, 7B, 7C, 7D are altered timings charts (Embodiment 4) for explaining the operations of the direct-current interrupter illustrated in Fig. 1, different from those illustrated in Figs. 5A, 5B, 5C, 5D and Figs. 6A, 6B, 6C, 6D.
Figs. 8A, 8B, 8C, 8D are altered timings charts (Embodiment 5) for explaining the operations of the direct-current interrupter illustrated in Fig. 1, different from those illustrated in Figs. 5A, 5B, 5C, 5D to Figs. 7A, 7B, 7C, 7D.
Fig. 9 is a configuration diagram illustrating a direct-current interrupter in Embodiment 6 being an example for implementing the timing charts illustrated in Figs. 8A, 8B, 8C, 8D.
Figs. 10A, 10B, 10C, 10D are altered timings charts (Embodiment 7) for explaining the operations of the direct-current interrupter illustrated in Fig. 1, different from those illustrated in Figs. 5A, 5B, 5C, 5D to Figs. 8A, 8B, 8C, 8D.
Fig. 11 is a configuration diagram illustrating a direct-current interrupter in Embodiment 8 being an example for implementing the timing charts illustrated in Figs. 10A, 10B, 10C, 10D.

### DETAILED DESCRIPTION

A direct-current interrupter in an embodiment includes a current-carrying path and a current-interrupting path connected in parallel to the current-carrying path. The current-carrying path includes a first switch and a second switch connected in series and a resistor connected in parallel to the second switch. The first switch has a predetermined first withstand voltage property and switches between conduction and non-conduction of current by using no semiconductor switch. The second switch has a second withstand voltage property lower in withstand voltage property than the first withstand voltage property and switches between conduction and non-conduction of current by using no semiconductor switch. The resistor protects the second switch from voltage to be applied to the second switch. The current-interrupting path includes a semiconductor switch and a current source connected in series and a non-linear resistor connected in parallel to a series connection of the semiconductor switch and the current source.

Further, a current-interrupting method of an embodiment is a current-interrupting method by the above direct-current interrupter and is as follows. Namely, (1) a current-carrying path current being a current flowing through the current-carrying path is detected. (2) The output current of the current source is controlled so that the current-carrying path current is reduced to a predetermined threshold current value or less close to zero. (3) Electrode opening control on the first or second switch is started after the current-carrying path current is reduced to the threshold current value or less. (4) The semiconductor switch is controlled to switch to OFF at least after a point in time of the electrode opening control on the first or second switch. Some other current-interrupting methods of embodiments are additionally disclosed.

### (Embodiment 1)

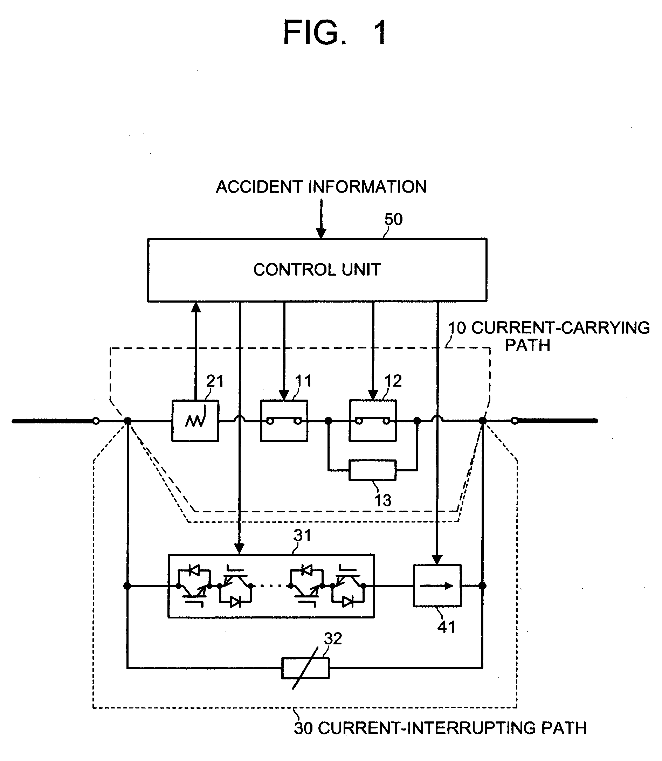

On the basis of the above, a direct-current interrupter of an embodiment will be described below referring to the drawings. Fig. 1 illustrates a configuration of the direct-current interrupter of Embodiment 1. As illustrated in Fig. 1, the direct-current interrupter has a current-carrying path 10, a current-interrupting path 30, and a control unit 50 that controls them. The current-carrying path 10 is provided with a switch 11, a switch 12, a resistor 13, and a current detecting unit 21. The current-interrupting path 30 is provided with a semiconductor switch 31, a current source 41, and a non-linear resistor 32.

At normal time, the switches 11, 12 on the current-carrying path 10 are closed to pass current through the current-carrying path 10. At the time when current interruption is required because of an accident or the like, the control unit 50 issues a command to turn the semiconductor switch 31 into an on-state and cause the current source 41 to pass current to thereby forcibly and temporarily cause the current-interrupting path 30 to conduct electricity. Meanwhile, the control unit 50 opens the switches 11, 12 not to conduct current through the current-carrying path 10 to thereby commute the current to the side of the current-interrupting path 30, and limits immediately thereafter the current flowing through the current-interrupting path 30 to complete interruption.

In Fig. 1, the direct current at normal time can be generally considered to take both the case of flowing from the left to the right in the drawing and the case of flowing from the right to the left in the drawing, and the direct-current interrupter copes with both the cases. Hereinafter, the direct-current interrupter will be described assuming that the direct current at normal time flows from the left to the right in the drawing for convenience of explanation.

The switch 11 is a switch that switches between conduction and non-conduction of current by using no semiconductor switch and has a predetermined high withstand voltage property (described later). The switch 12 is also a switch that switches between conduction and non-conduction of current by using no semiconductor switch and has a withstand voltage property lower than the withstand voltage property of the switch 11. The switch 11 and the switch 12 are switches different in characteristic as described above and share roles. The switch 11 and the switch 12 are connected in series, and each of them has electrodes whose opening/closing is controlled by the control unit 50.

The resistor 13 connected in parallel to the switch 12 is a resistor that protects the switch 12 by suppressing the voltage that may be applied to the switch 12 to a low voltage. More specifically, in the state that the switch 11 and the switch 12 are controlled into open states, the voltage applied to the direct-current interrupter is in a state of being substantially borne by the voltage developed across the switch 11 and the voltage developed across the switch 12. In this event, since no resistor is connected in parallel to the switch 11 (= there is an equivalent very large resistor), most of the voltage applied to the direct-current interrupter is borne as a resistance-divided voltage by the side of the switch 11. However, the indication of the lower limit of the resistance value of the resistor 13 will be described later because it has a point relating to the resistance value at on-time of the semiconductor switch 31.

The current detecting unit 21 detects the current flowing through the current-carrying path 10 and communicates it to the control unit 50. To this end, the current detecting unit 21 is provided in the current-carrying path 10 to be connected in series to the switches 11, 12. A conceivable concrete example of the current detection is a configuration of inserting a resistor having a very small resistance value into the current-carrying path 10 and detecting the voltage across it.

The semiconductor switch 31 is a switch that switches between conduction and non-conduction of current, and its switching control is performed by the control unit 50. As a concrete example of the semiconductor switch, a structure is used as illustrated in the drawing in which a unit element is configured by connecting two inverse-parallel connection (parallel connection mutually inverse in forward direction) elements in series in opposite direction to face each other, the inverse-parallel connection being an inverse-parallel connection of an IGBT (insulated gate bipolar transistor) and a diode, and a large number of the unit configurations are connected in series so as to have two terminals as a whole. When a voltage caused by a control signal from the control unit 50 is applied to each of gates of the IGBTs, each of the unit elements becomes a state (namely, an on-state) in which current flows in either direction.

Various concrete structures of the semiconductor switch other than the illustrated one can be employed. The semiconductor switch generally has an equivalent resistance (on-resistance) in the on-state and causes voltage drop due to conduction. This voltage drop becomes larger depending on the number of the aforementioned unit elements in series in the case of the semiconductor switch 31 illustrated in Fig. 1, namely, the on-resistance of the whole semiconductor switch 31 also becomes larger depending on the number of the unit elements in series.

The necessary number of the unit elements in series can be decided under the condition that the interrupter can withstand the high voltage to be applied thereto after the semiconductor switch 31 reaches an off-state for the current interruption. This is generally a large number to some extent (for example, several hundreds).

Further, the on-resistance needs to be sufficiently lower than that of the resistor 13 provided in the current-carrying path 10 in terms of a necessary function of temporarily passing current as the current-interrupting path 30. Actually, a minimum required number of the unit elements in series has been decided in terms of withstand voltage, and the on-resistance of the semiconductor switch 31 is decided depending on the number. As a result, the resistance value of the resistor 13 existing in the current-carrying path 10 can be decided to be a considerably large resistance value on the basis of the on-resistance. As an example, the resistance value of the resistor 13 is made at least 1000 times or more larger than the on-resistance of the semiconductor switch 31.

The control by the control unit 50 of switching the semiconductor switch 31 is normally a shift of being turning off the semiconductor switch 31 at normal time and switching the semiconductor switch 31 to ON once and then immediately returning it to OFF at interrupting operation time. However, not limited to this, even if the control unit 50 performs control to turn on the semiconductor switch 31 at normal time, no current actually flows through the current-interrupting path 30 because of its on-resistance, and all the current flows through the side of the current-carrying path 10, so that the control to turn on the semiconductor switch 31 at normal time in this manner is also an available option.

The current source 41 is connected in series to the semiconductor switch 31, whereby a series-connected element composed of the current source 41 and the semiconductor switch 31 is connected in parallel to the current-carrying path 10. An output current of the current source 41 is desirably controlled by the control unit 50. In this point, various examples of, particularly, time-series control will be further described later. In simpler terms, the current source 41 is a structure for quickly commuting the current flowing through the current-carrying path 10 by a forced current by the current source 41 as a current flowing through the side of the current-interrupting path 30 at the time when current interruption becomes necessary because of an accident or the like. The forced current by the current source 41 is sometimes called a "reverse current" below because it is a current for reducing the current through the current-carrying path 10.

The non-linear resistor 32 is connected in parallel to the series-connected element composed of the current source 41 and the semiconductor switch 31. The non-linear resistor 32 functions at a final stage of the interrupting operation of the direct-current interrupter and, concretely, allows current to temporarily flow therethrough in a state that not only the current-carrying path 10 but also the series-connected element composed of the semiconductor switch 31 and the current source 41 do not conduct current any longer. At the initial of the temporal flow, there flows a current having the same value as that of the current which has flown through the series-connected element composed of the current source 41 and the semiconductor switch 31 immediately before the state. This causes a relatively large voltage drop in the non-linear resistor 32 to decrease the current, the decrease in current increases the resistance value because of the non-linearity of the resistor, and the current becomes substantially zero due to the increased resistance value, resulting in completion of the current interruption.

Note that to the control unit 50, the current detected by the current detecting unit 21 is communicated as mentioned in the above explanation. Then, the control unit 50 controls the opening/closing of the electrodes of the switches 11, 12, controls the semiconductor switch 31 to switch between ON and OFF, and controls the output current of the current source 41. Inside the control unit 50, respective subordinate control units exist corresponding to those controls, and the subordinate control units are connected to one another to transmit necessary information required for those controls to be shared with one another.

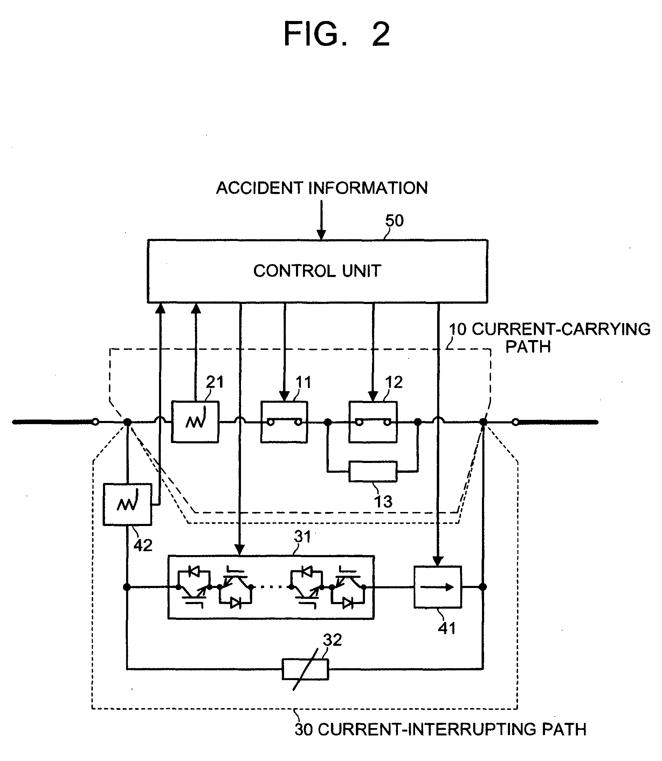

Next, Fig. 2 illustrates a configuration as a modification example of the direct-current interrupter illustrated in Fig. 1. Components which are the same as or corresponding to those illustrated in Fig. 1 are given the same reference numerals in Fig. 2, and description thereof will be omitted. The difference of the configuration illustrated in Fig. 2 from that illustrated in Fig. 1 is that a current detecting unit 42 is provided to be inserted in series to the current-interrupting path 30. The value of the current detected by the current detecting unit 42 is communicated to the control unit 50. The other configuration is the same as that illustrated in Fig. 1. The reason why the current detecting unit 42 is provided is as follows.

In the configuration illustrated in Fig. 1, the control of the current outputted from the current source 41 is performed by the command from the control unit 50, in which the command is transmitted unilaterally only from the control unit 50 to the current source 41, so that the control unit 50 cannot recognize whether the current source 41 outputs the current according to the command. A state that the command and the actual state are temporally separated from each other is thought to occur, in particular, when the command is dynamically changed, but the control unit 50 cannot be concerned with the state. Hence, inserting and installing the current detecting unit 42 as illustrated makes it possible for the control unit 50 to recognize the value of the current outputted from the current source 41 as a result of the command. Accordingly, it can be considered to be able to improve the quality of control as a whole.

According to the direct-current interrupter of Embodiment 1 illustrated in Fig. 1, Fig. 2, the power loss at normal time can be greatly reduced because a switch using a semiconductor switch is not used for the current-carrying path 10. Further, since the current source 41 is inserted in the current-interrupting path 30, it is possible to forcibly and quickly (in several milliseconds as an example) commute the current through the current-carrying path 10 to the side of the current-interrupting path 30 as the current to be interrupted. Accordingly, it becomes possible to decrease the value of the current to be interrupted by the current-interrupting path 30 so as to avoid an increase in size of the interrupter. More specifically, it is possible to avoid the increase in size by suppressing the current rating of the semiconductor switch 31 to small.

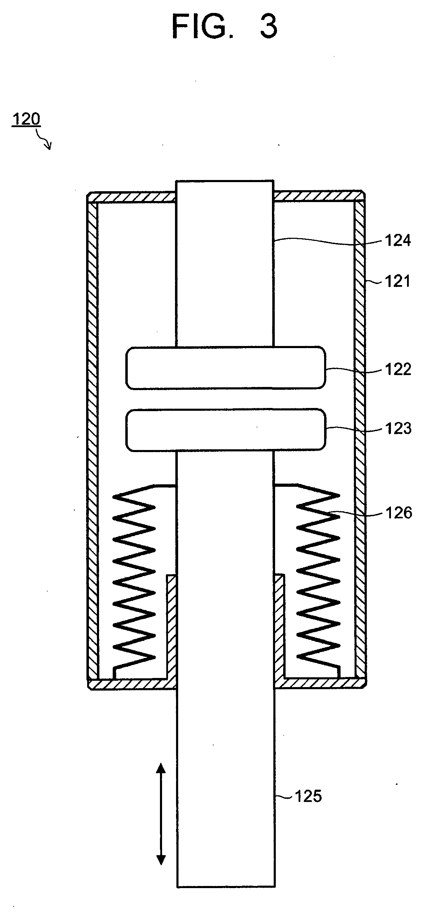

Next, Fig. 3 is a cross-sectional view schematically illustrating a vacuum valve being an element included in the switch 12 illustrated in Fig. 1, Fig. 2. As illustrated in Fig. 3, a vacuum valve 120 has, as main components, an insulating tube 121, a fixed side electrode 122, a movable side electrode 123, a fixed side current-carrying shaft 124, a movable side current-carrying shaft 125, and a bellows 126.

Though a concrete example of the switch 12 is not mentioned in the explanation of Fig. 1, Fig. 2, a vacuum switch can be used as the switch 12. The vacuum switch cannot generally be said to be a switch high in withstand voltage property but is excellent in insulation recovery characteristic. Hence, even if the vacuum switch is used as the switch 12, the switch 12 can withstand a low applied voltage corresponding to the voltage drop of the semiconductor switch 31 in the on-state, which may be caused after the current through the current-carrying path 10 is reduced to zero, and can achieve the excellent insulation recovery characteristic as the direct-current interrupter.

The vacuum switch has the vacuum valve 120 as illustrated in Fig. 3 and is provided, in addition to that, with a mechanism (not illustrated) for desirably moving the movable side current-carrying shaft 125 in its axial direction. The inside of the cylindrical insulating tube 121 is kept under an almost vacuum, and the bellows 126 is provided, fixed to the movable side current-carrying shaft 125 and the insulating tube 121 so as to isolate the vacuum from the outside. The configuration of the vacuum valve 120 will be described below.

The fixed side current-carrying shaft 124 is provided in a manner to penetrate an upper surface of the cylinder of the insulating tube 121, and the fixed side current-carrying shaft 124 is fixed to the insulating tube 121 at a portion penetrating the insulating tube 121. A portion of the fixed side current-carrying shaft 124 that projects by penetrating the upper surface of the cylinder of the insulating tube 121 becomes one terminal as the switch. At an end portion of the fixed side current-carrying shaft 124 located inside the insulating tube 121, the fixed side electrode 122 in a flat disc shape having an axis common to that of the fixed side current-carrying shaft 124 is provided. Facing a surface of the fixed side electrode 122 on the side opposite to the side where the fixed side current-carrying shaft 124 is located, a surface of the movable side electrode 123 having the same shape as and an axis common to those of the fixed side electrode 122 is located.

On the side of movable side electrode 123 opposite to the side of the surface facing the fixed side electrode 122, the movable side current-carrying shaft 125 is provided having an axis common to those of the fixed side current-carrying shaft 124, the fixed side electrode 122, and the movable side electrode 123. The movable side current-carrying shaft 125 is provided in a manner to penetrate a lower surface of the cylinder of the insulating tube 121, and a penetrating and projecting portion thereof becomes another terminal as the switch. Note that as has been already explained, the bellows 126 has one end fixed to the movable side current-carrying shaft 125 and another end fixed to the insulating tube 121. The bellows 126 maintains air-tightness inside the insulating tube 121 at all times even if the movable side current-carrying shaft 125 is moved in its axial direction so as to open/close current.

Considering a case where the direct-current interrupter is used to a system of, for example, about a direct-current 300 kV, the semiconductor switch 31 has a huge number of unit elements as has been already explained so as to ensure its withstand voltage, but the switch 12 only needs to withstand the voltage corresponding to the voltage drop by the semiconductor switch 31 in the on-state at most. The voltage drop is estimated to be several kV, and even the switch 12 being the vacuum switch can withstand this degree of voltage. Thus, the switch 12 being the vacuum switch can achieve the excellent insulation recovery characteristic as the direct-current interrupter.

On the other hand, though a concrete example of the switch 11 is not mentioned in the explanation of Fig. 1, Fig. 2, a gas switch in which, for example, SF₆ as an insulating gas is encapsulated can be used as the switch 11. The gas switch is generally high in withstand voltage property. Hence, when the gas switch is used as the switch 11, the switch 11 can receive and withstand a high voltage applied to the direct-current interrupter which may be caused after the current interruption. Note that though as has been already explained, since the resistor 13 is provided in parallel to the side of the switch 12, the side of the switch 11 bears most of the high voltage applied to the direct-current interrupter.

Considering a case where the direct-current interrupter is used to a system of, for example, about a direct-current 300 kV, it is estimated that the direct-current interrupter reaches a state where a voltage of about 500 kV is applied thereto at most immediately after the semiconductor switch 31 shifts to the off-state. Use of the switch 11 being the gas switch enables the direct-current interrupter to withstand such a high voltage.

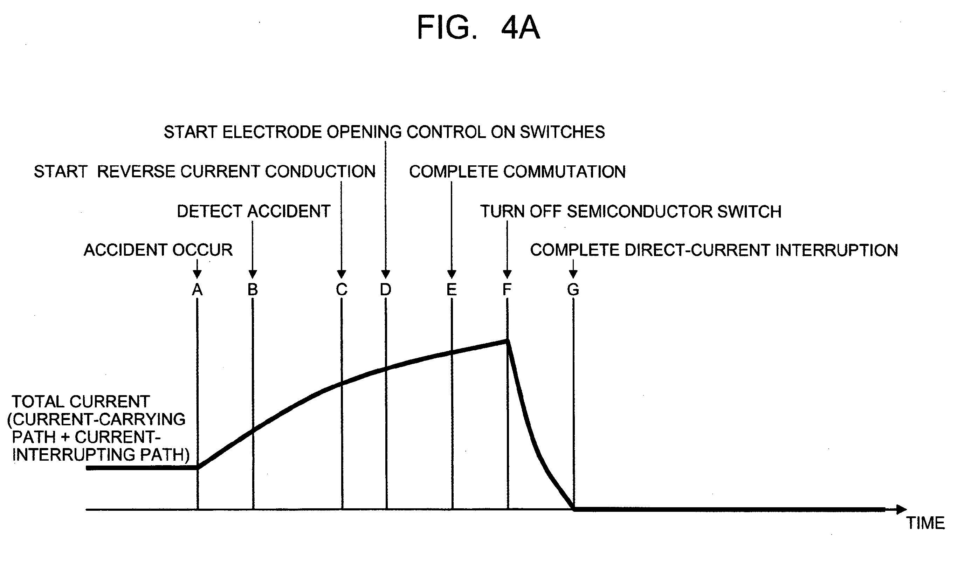

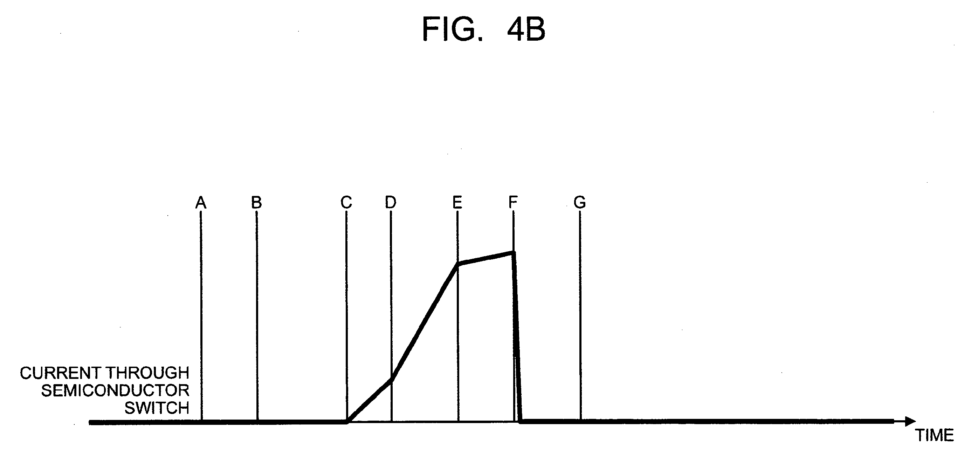

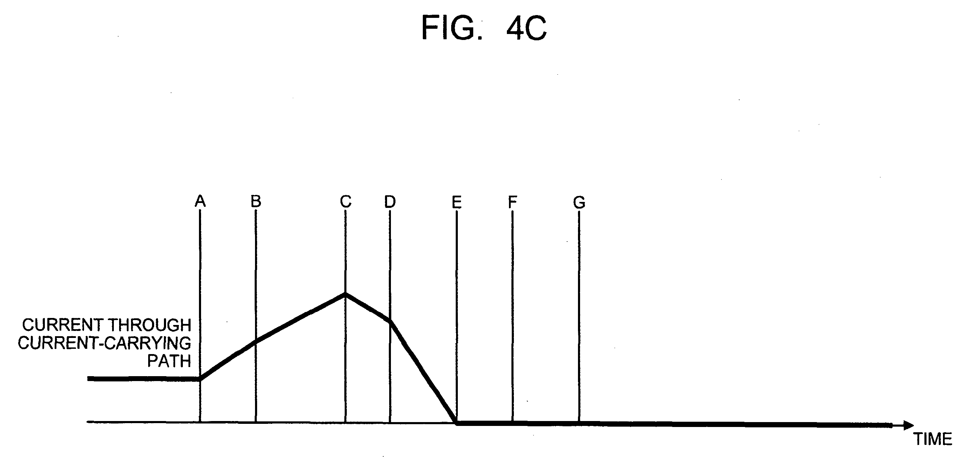

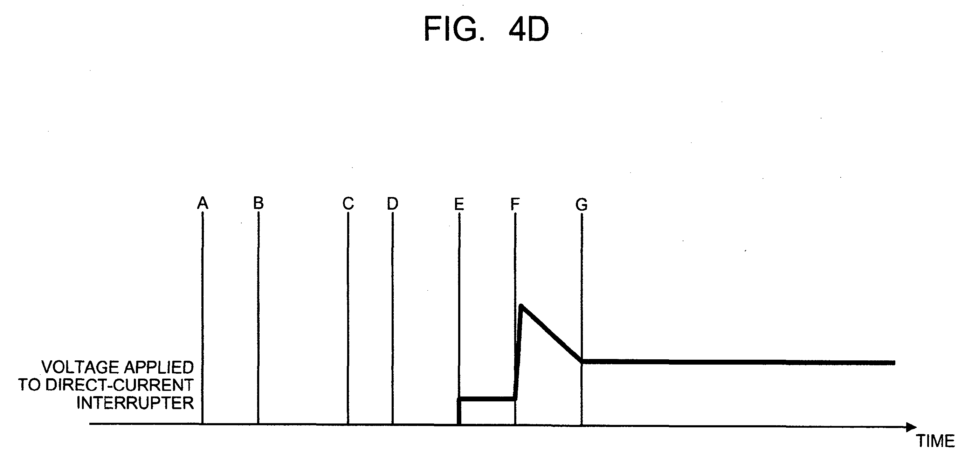

Next, time-series operations of the direct-current interrupter illustrated in Fig. 1, Fig. 2 will be further explained referring to Figs. 4A, 4B, 4C, 4D. Figs. 4A, 4B, 4C, 4D illustrate standard timings for explaining the operations of the direct-current interrupter illustrated in Fig. 1. Note that the operations in the case of the direct-current interrupter illustrated in Fig. 1 will be explained in the following description, and they are almost the same as those in the case of the direct-current interrupter illustrated in Fig. 2 other than that the already-described advantages are added.

Fig. 4A illustrates time-series changes of the total current (namely, the current of the sum of the current flowing through the current-carrying path 10 and the current flowing through the current-interrupting path 30). The initial stage (stage before Time A) in the drawing illustrates a state where a current at normal time flows. As for breakdown, all the current is the current flowing through the side of the current-carrying path 10 which is as illustrated in Fig. 4C. As a matter of course, no current flows through the side of the semiconductor switch 31 (and the current-interrupting path 30) at this stage as illustrated in Fig. 4B.

When an accident occurs in a direct-current power transmission system at Time A, the total current gradually increases as illustrated in Fig. 4A. The fact of occurrence of the accident is detected by a not-illustrated accident detecting device (Time B), and its information is communicated to the control unit 50. Upon receipt of the information, the control unit 50 controls the current source 41 to start to output current (Time C: start reverse current conduction). Thus, as illustrated in Fig. 4B the current flowing through the semiconductor switch 31 gradually increases according to the drive capability of the current source 41 or as a result of being controlled, whereas as illustrated in Fig. 4C the current through the current-carrying path 10 gradually decreases as a reflective action thereto.

Then, in the middle that the output current of the current source 41 is gradually increased by the control unit 50, the control unit 50 starts electrode opening control on the switches 11, 12 (Time D). When the electrode opening control on the switches 11, 12 is started, the electrodes are physically separated from each other in each of the switches 11, 12, but an arc current flows between the electrodes at the beginning because a separation distance between them is short. The arc current causes an arc resistance between the electrodes, so that if the drive capability of the current source 41 is limited, the gradually increasing speed of its output current may slightly increase after Time D.

The above-described gradually increasing state of the output current of the current source 41 is continued until the current flowing through the current-carrying path 10 reaches zero (Time E) by the action of the current flowing through the semiconductor switch 31. The fact that the current has reached zero is communicated to the control unit 50 by the current detecting unit 21 provided in the current-carrying path 10 and recognized by the control unit 50. With this, the commutation of the current flowing through the current-carrying path 10 to the current-interrupting path 30 is completed.

After the value of the current flowing through the current-carrying path 10 has decreased to zero, the control unit 50 controls the current source 41 regarding the output current so as to keep the value of the current through the current-carrying path 10 at zero (from Time E to Time F). This is control also performed by communicating the detected result by the current detecting unit 21 to the control unit 50. In a period from Time E to Time F, a certain level of voltage drop occurs due to the on-resistance by the current flowing through the semiconductor switch 31, which is a voltage applied to the direct-current interrupter (see Fig. 4D).

As has been already explained, the switch 12 has the withstand voltage property with respect to the applied voltage (for example, several kV). From Time E to Time F, the voltage across the semiconductor switch 31 may be possibly applied as it is to the switch 12. This is because there is a possibility that the electrode open state on the side of the switch 11 has not yet finally been established.

After Time E, at and after the time point (Time F) when the electrode open states of the switches 11, 12 can be considered to have been finally established, the control unit 50 controls the semiconductor switch 31 so as to bring the semiconductor switch 31 into the off-state. Since the current-carrying path 10 has already conducted no current at Time E and the series-connected element composed of the semiconductor switch 31 and the current source 41 is changed to conduct no current at Time F, current temporarily flows through the non-linear resistor 32 at and after Time F.

At the initial stage of the temporal flow, the current having the same value as that of the current which has flown through the series-connected element composed of the semiconductor switch 31 and the current source 41 immediately before the stage. This causes a relatively large voltage drop (for example, 500 kV) in the non-linear resistor 32 to decrease the current, the decrease in current increases the resistance value because of the non-linearity of the resistor, and the current becomes substantially zero due to the increased resistance value, resulting in completion of the current interruption (Time G). At and after Time G, a direct-current voltage (for example, 300 kV) according to the direct-current power transmission system is applied to the direct-current interrupter (see Fig. 4D).

According to the operations of the direct-current interrupter according to the standard timings as illustrated in Figs. 4A, 4B, 4C, 4D, in the switch 11 or the switch 12, the arc current flows between its electrodes after the electrode opening control to increase the electric resistance. Accordingly, there occurs a possibility that the gradually increasing speed for gradually increasing the output current from zero can be further correspondingly increased on the side of the current source 41 and, as a result, it becomes possible to more quickly commute the current through the current-carrying path 10 to the side of the current-interrupting path 30 as the current to be interrupted. Consequently, the direct-current interrupter becomes to have high speed corresponding thereto.

### (Embodiment 2)

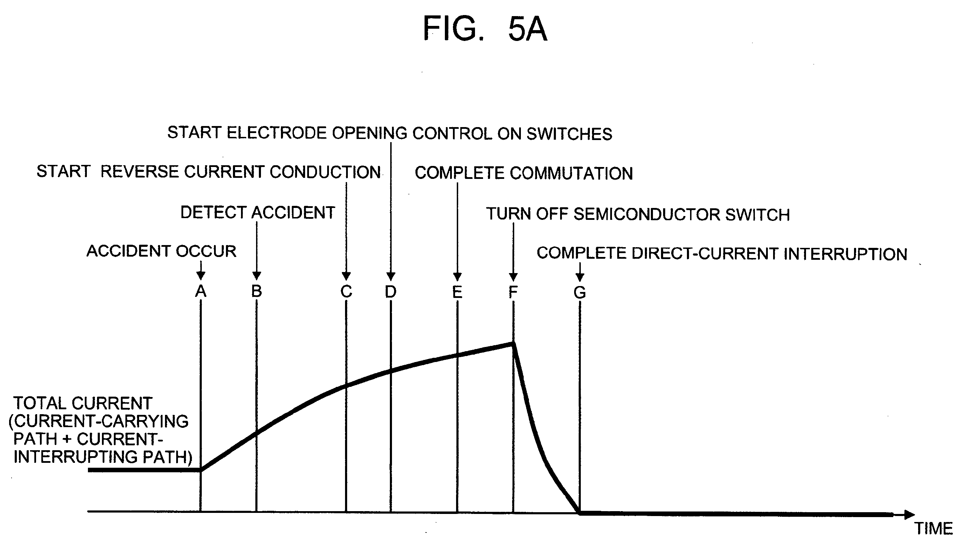

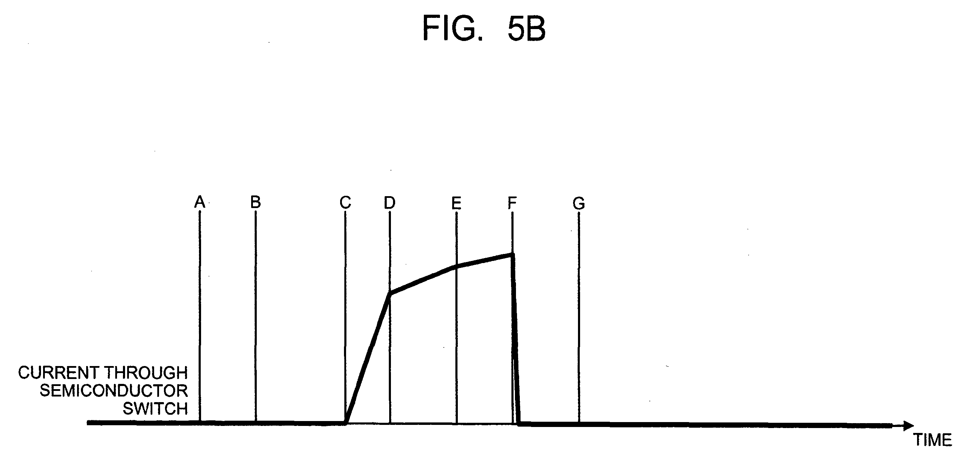

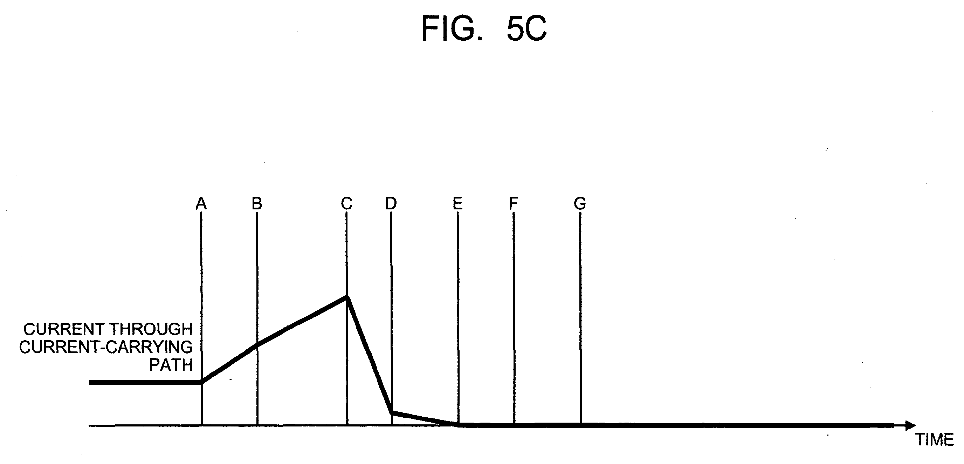

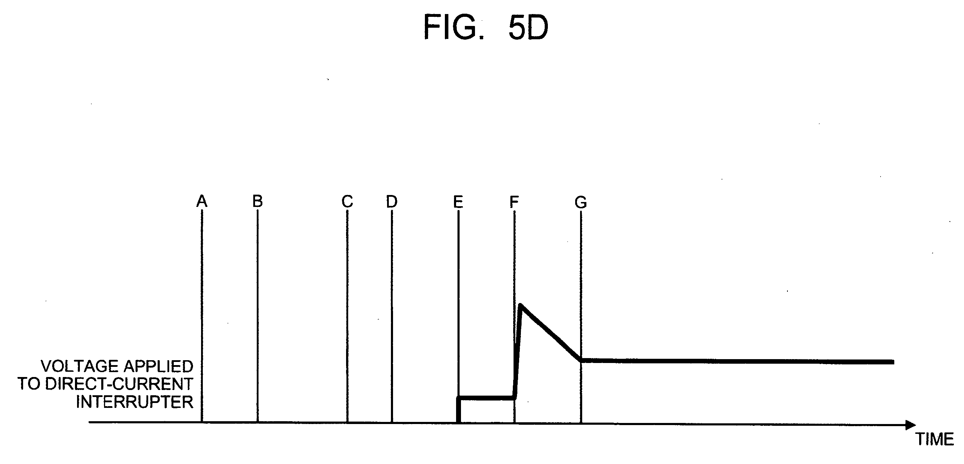

Next, Embodiment 2 will be explained referring to Figs. 5A, 5B, 5C, 5D. Figs. 5A, 5B, 5C, 5D illustrate altered timings for explaining the operations of the direct-current interrupter illustrated in Fig. 1. This embodiment may be recognized to have a physical configuration being almost the same as that illustrated in Fig. 1, Fig. 2, but has timings of control by the control unit 50 different from those illustrated in Figs. 4A, 4B, 4C, 4D. Therefore, overlapped description thereof will be omitted, and points different in comparison with Figs. 4A, 4B, 4C, 4D will be mainly explained below.

This embodiment is characterized in that timing to start the electrode opening control on the switches being the illustrated timing at Time D. This timing is the timing when the current of the current source 41 is controlled so that the current through the current-carrying path 10 is reduced to a predetermined threshold current value or less close to zero by the control unit 50 (see Time D in Fig. 5C). At the point in time, the electrode opening control on the switches 11, 12 is started.

Consequently, according to this embodiment, the electrode opening controls are started after the current through the current-carrying path 10 reaches a predetermined current value or less close to zero, thereby making it possible to significantly suppress occurrence of an arc current between the electrodes of each of the switches 11, 12 so as to effectively reduce the damage to the electrodes. Note that even if starts of the electrode opening control on the switches 11, 12 are slightly different from each other, almost the same effect can be considered to be achieved.

In this embodiment, it is preferable to use a vacuum switch having flat plate electrodes among vacuum switches, as the switch 12. This is because the vacuum switch having the flat plate electrodes is low in electric resistance in a closed state and thereby can further reduce the power loss at normal time. The flat plate electrodes are electrodes in which the surfaces (contact points) of the fixed side electrode 122 and the movable side electrode 123 facing each other, referring to the already-described schematic view illustrated in Fig. 3, are formed in a flat shape. The flat plate electrodes are generally likely to be damaged because an arc current locally exists, but the damage to the electrodes due to the arc current is greatly reduced by performing the above controls.

### (Embodiment 3)

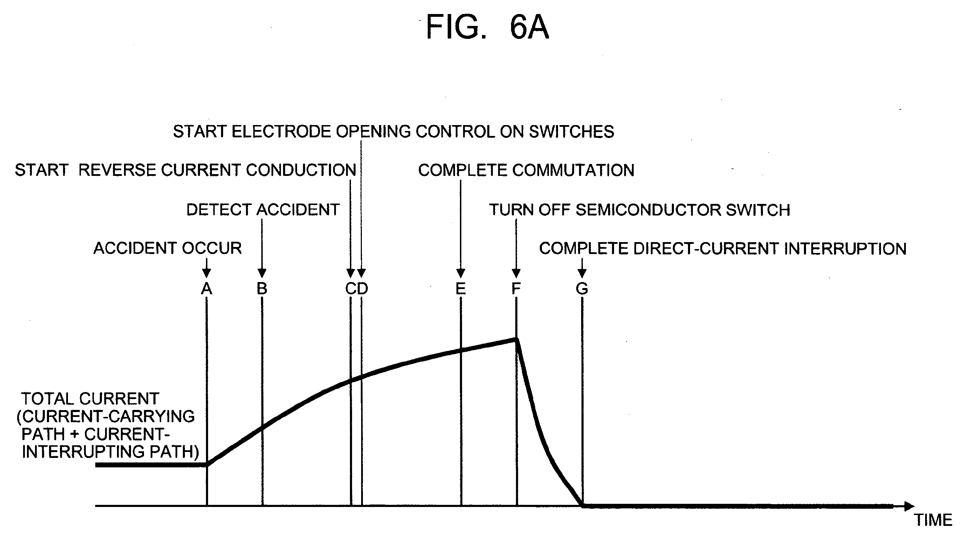

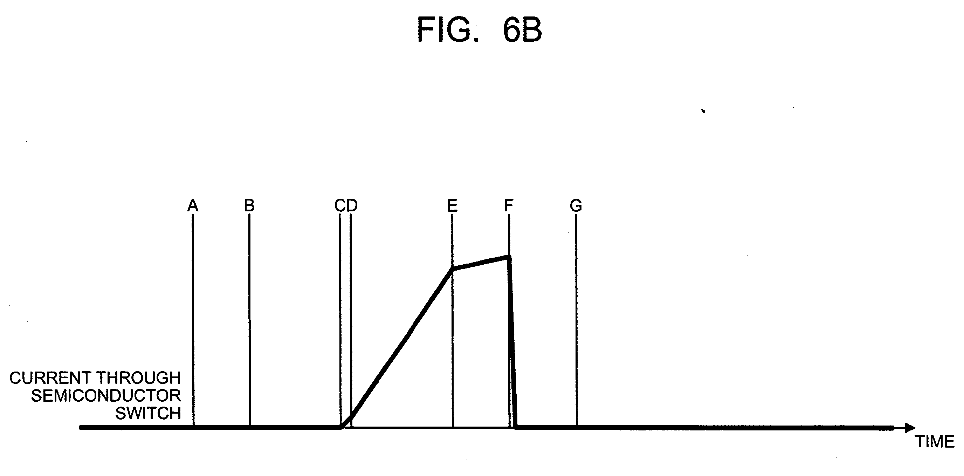

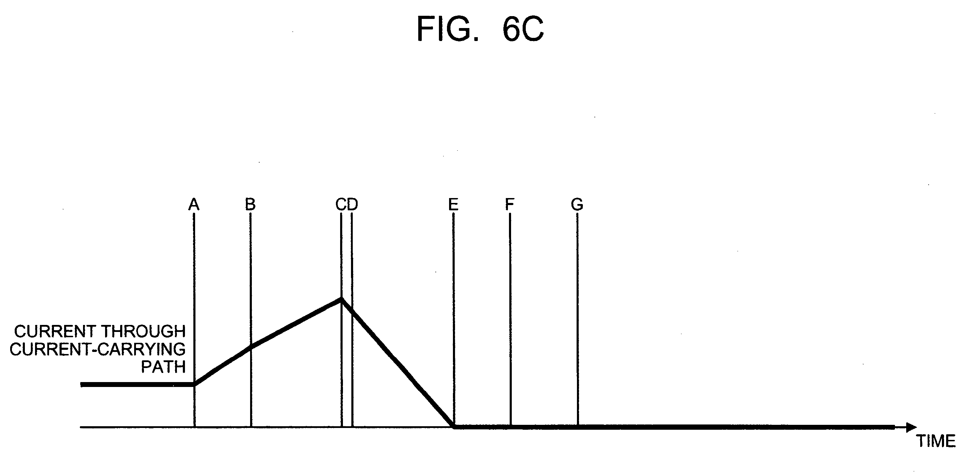

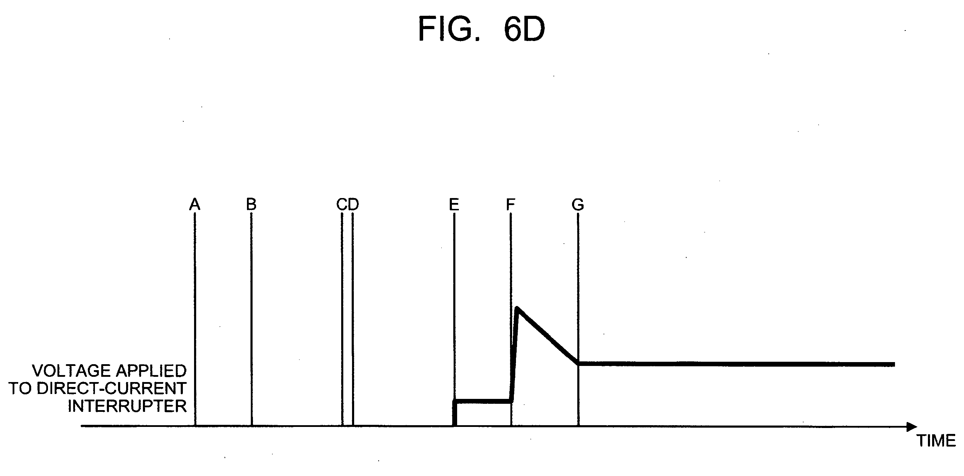

Next, Embodiment 3 will be explained referring to Figs. 6A, 6B, 6C, 6D. Figs. 6A, 6B, 6C, 6D illustrate altered timings for explaining the operations of the direct-current interrupter illustrated in Fig. 1, different from those illustrated in Figs. 5A, 5B, 5C, 5D. This embodiment may be also recognized to have a physical configuration being almost the same as that illustrated in Fig. 1, Fig. 2, but has timings of control by the control unit 50 different from those illustrated in Figs. 4A, 4B, 4C, 4D and 5A, 5B, 5C, 5D. Therefore, overlapped description thereof will be omitted, and points different in comparison with Figs. 4A, 4B, 4C, 4D and 5A, 5B, 5C, 5D will be mainly explained below.

This embodiment is also characterized in that timing to start the electrode opening control on the switches being the illustrated timing at Time D. More specifically, this timing (Time D) is set to a timing after and immediately close to Time C that is a timing to start reverse current conduction. As has been already explained in Figs. 4A, 4B, 4C, 4D, when the electrode opening control on the switches 11, 12 is started at the timing when the current flows through the current-carrying path 10, an arc current flows between the electrodes after the electrode opening controls to increase the electric resistance.

This embodiment positively utilizes this action. More specifically, there occurs a possibility that on the side of the current source 41 the gradually increasing speed for gradually increasing the output current from zero can be further increased correspondingly to the increase in electric resistance and, as a result, it becomes possible to more quickly commute the current through the current-carrying path 10 to the side of the current-interrupting path 30 as the current to be interrupted. Consequently, the direct-current interrupter can be made a direct-current interrupter having high speed corresponding thereto. Note that even if starts of the electrode opening control on the switches 11, 12 are slightly different from each other, almost the same effect can be considered to be achieved.

In this embodiment, it is preferable to use a vacuum switch having vertical magnetic field electrodes among vacuum switches, as the switch 12. This is because the vacuum switch having the vertical magnetic field electrodes controls the arc current flowing between the electrodes after the electrode opening control to diffuse by the vertical magnetic field, thereby suppressing damage to the electrodes. The vertical magnetic field electrodes are electrodes in which a coil is attached to the electrode itself of each of the fixed side electrode 122 and the movable side electrode 123, referring to the already-described schematic view illustrated in Fig. 3, to apply a strong magnetic field in parallel to the arc. This confines charged particles in the magnetic field and equally disperses them to the whole electrode, and thereby can greatly suppress the damage to the electrodes.

### (Embodiment 4)

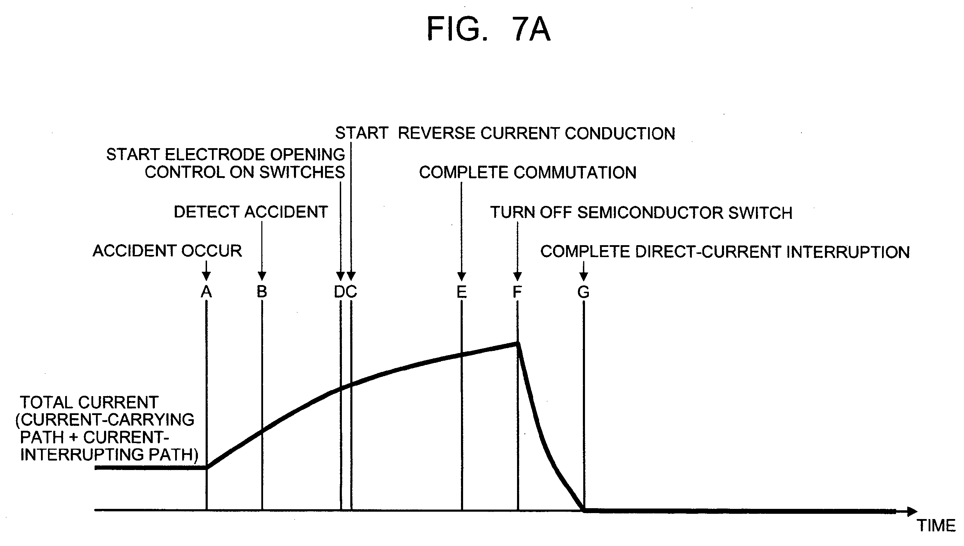

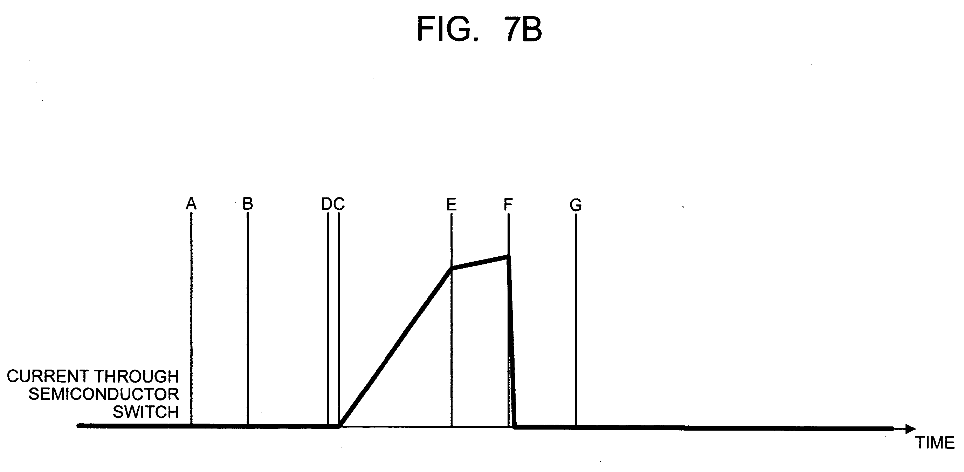

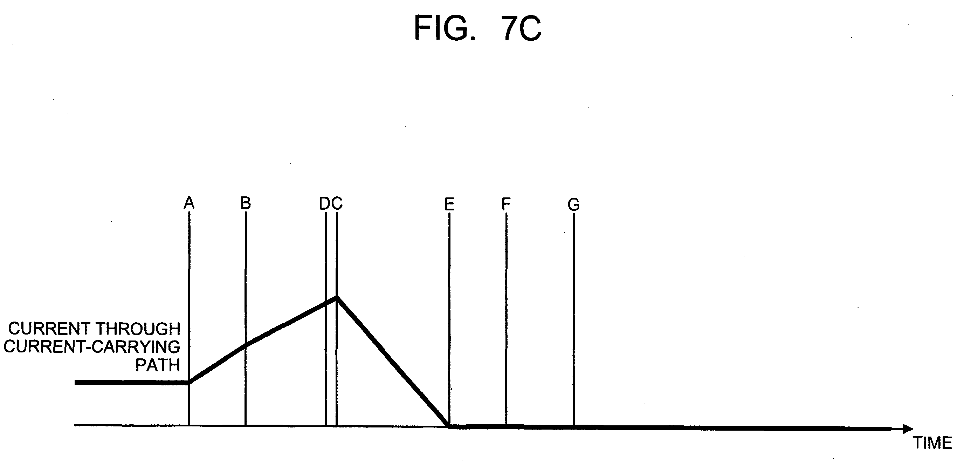

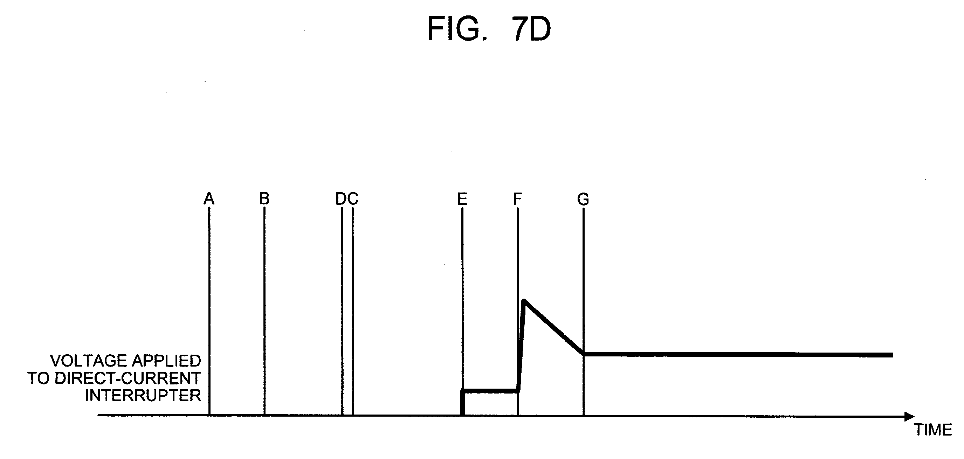

Next, Embodiment 4 will be explained referring to Figs. 7A, 7B, 7C, 7D. Figs. 7A, 7B, 7C, 7D illustrate altered timings for explaining the operations of the direct-current interrupter illustrated in Fig. 1, different from those illustrated in Figs. 5A, 5B, 5C, 5D and Figs. 6A, 6B, 6C, 6D. This embodiment may also be recognized to have a physical configuration being almost the same as that illustrated in Fig. 1, Fig. 2, but has timings of control by the control unit 50 slightly different from those illustrated in Figs. 4A, 4B, 4C, 4D to Figs. 6A, 6B, 6C, 6D. Therefore, overlapped description thereof will be omitted, and points different in comparison with Figs. 4A, 4B, 4C, 4D to Figs. 6A, 6B, 6C, 6D will be mainly explained below.

This embodiment is also characterized in that timing to start the electrode opening control on the switches being the illustrated timing at Time D, and this timing (Time D) is set to a timing before Time C that is a timing to start reverse current conduction. In short, this embodiment is an embodiment positively utilizing the action explained in 6A, 6B, 6C, 6D.

By shifting Time D forward, a much larger arc resistance raises a possibility to further increase the gradually increasing speed for gradually increasing the output current from zero on the side of the current source 41. As a result, it becomes possible to more quickly commute the current through the current-carrying path 10 to the side of the current-interrupting path 30 as the current to be interrupted. Consequently, the direct-current interrupter can be made a direct-current interrupter having high speed corresponding thereto. Note that even if starts of the electrode opening control on the switches 11, 12 are slightly different from each other, almost the same effect can be considered to be achieved.

In this embodiment, it is also preferable to use the vacuum switch having vertical magnetic field electrodes among vacuum switches, as the switch 12 so as to suppress the damage to the electrodes, as in the explanation for Figs. 6A, 6B, 6C, 6D.

### (Embodiment 5)

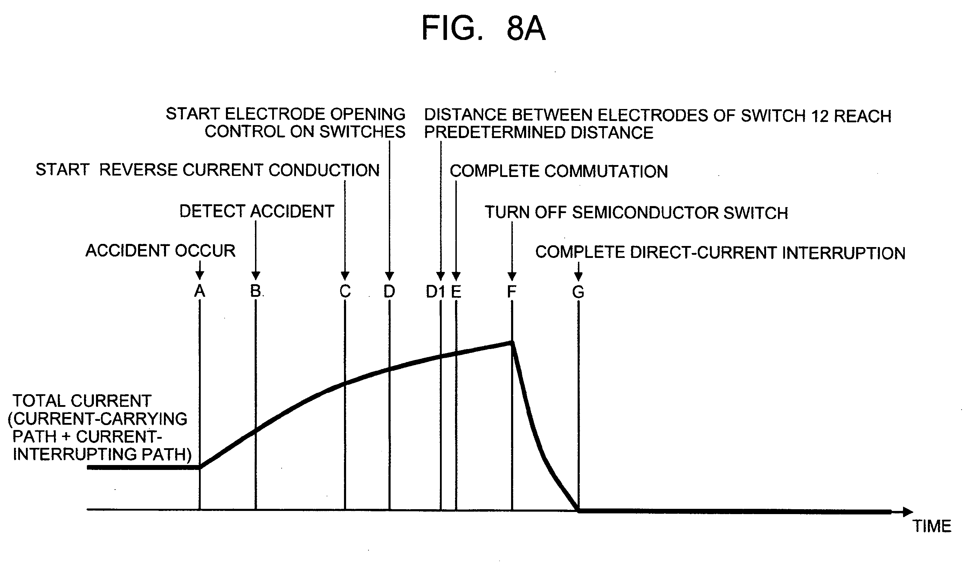

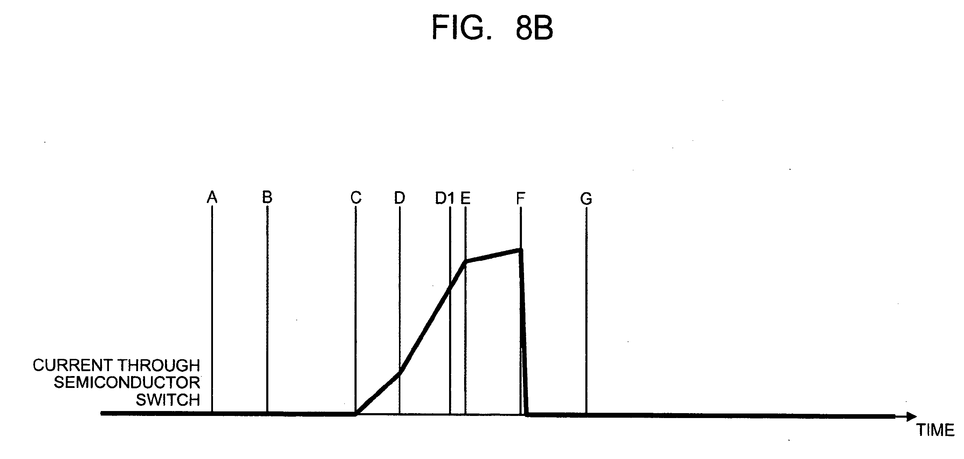

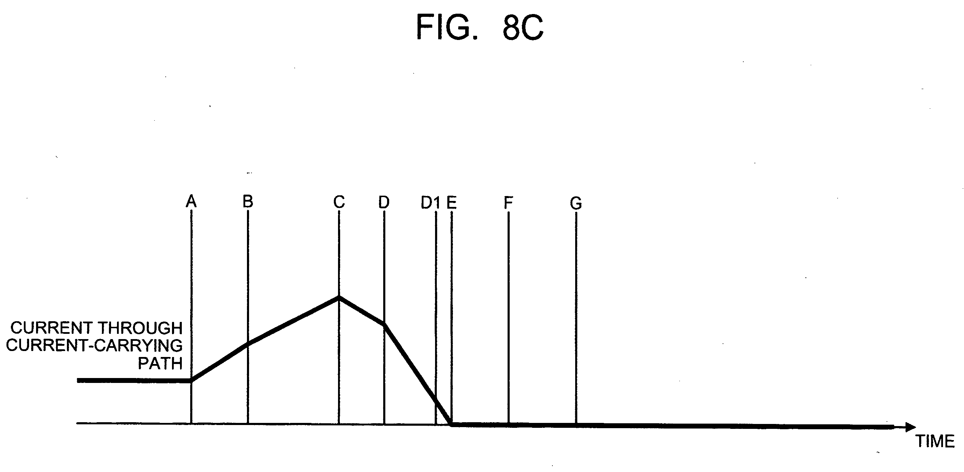

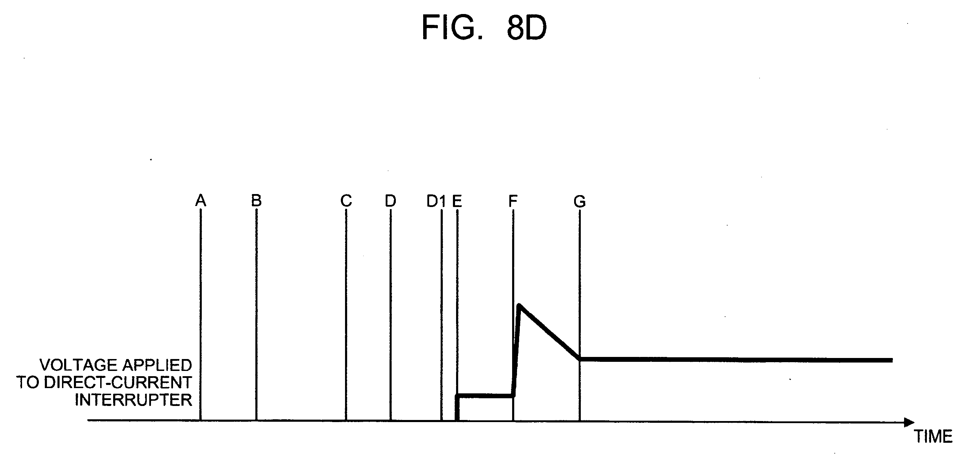

Next, Embodiment 5 will be explained referring to Figs. 8A, 8B, 8C, 8D. Figs. 8A, 8B, 8C, 8D illustrate altered timings for explaining the operations of the direct-current interrupter illustrated in Fig. 1, different from those illustrated in Figs. 5A, 5B, 5C, 5D to Figs. 7A, 7B, 7C, 7D. This embodiment may also be recognized to have a physical configuration being almost the same as that illustrated in Fig. 1, Fig. 2, but has timings of control by the control unit 50 slightly different from those illustrated in Figs. 4A, 4B, 4C, 4D to Figs. 7A, 7B, 7C, 7D. Therefore, overlapped description thereof will be omitted, and points different in comparison with Figs. 4A, 4B, 4C, 4D to Figs. 7A, 7B, 7C, 7D will be mainly explained below.

This embodiment performs control in consideration of Time D1 when the distance between the electrodes of the switch 12 reaches a predetermined distance, Time D1 being estimated from Time D when the electrode opening control is started on the switch 12. The output current of the current source 41 is controlled by the control unit 50 so that the commutation from the current-carrying path 10 to the current-interrupting path 30 is completed at a time point later than Time D1 (commutation completed at Time E). In short, the degree of gradual increase in the output current of the current source 41 is adjusted in this manner by the control unit 50.

Such control causes the voltage application to the switch 12 corresponding to the voltage drop by the semiconductor switch 31 after a state where the withstand voltage property of the switch 12 is sufficiently ensured (its period is from Time E to Time F), leading to a very preferable result in terms of operation of the switch 12.

### (Embodiment 6)

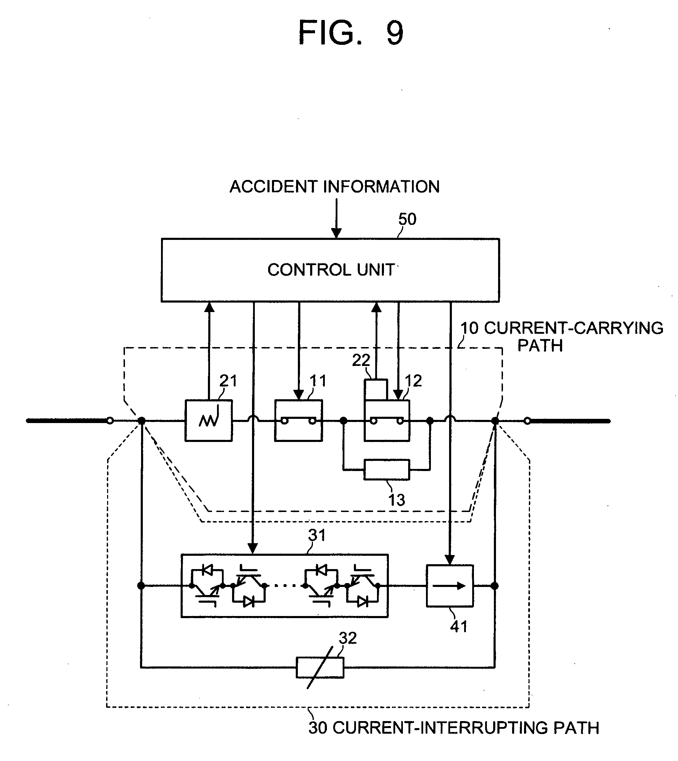

Fig. 9 illustrates a direct-current interrupter in Embodiment 6 being an example for implementing the timing charts illustrated in Figs. 8A, 8B, 8C, 8D. Components which are the same as or corresponding to those illustrated in Fig. 1 are given the same reference numerals in Fig. 9, and description thereof will be omitted. The difference of the configuration illustrated in Fig. 9 from that illustrated in Fig. 1 is that an interelectrode distance detecting unit 22 that detects the distance between the electrodes of the switch 12 and communicates it to the control unit 50 is provided at the switch 12. The other configuration is the same as that illustrated in Fig. 1.

This embodiment is the same in concept as the embodiment explained referring to Figs. 8A, 8B, 8C, 8D. Though Time D1 when the distance between the electrodes of the switch 12 reaches the predetermined distance is estimated from Time D when the electrode opening control is started on the switch 12 in the explanation for Figs. 8A, 8B, 8C, 8D, the interelectrode distance of the switch 12 is communicated by the interelectrode distance detecting unit 22 to the control unit 50, based on which the control unit 50 can recognize Time D1. The timings thereafter are the same as those in the explanation for Figs. 8A, 8B, 8C, 8D. The effects are the same as those in the explanation for Figs. 8A, 8B, 8C, 8D.

### (Embodiment 7)

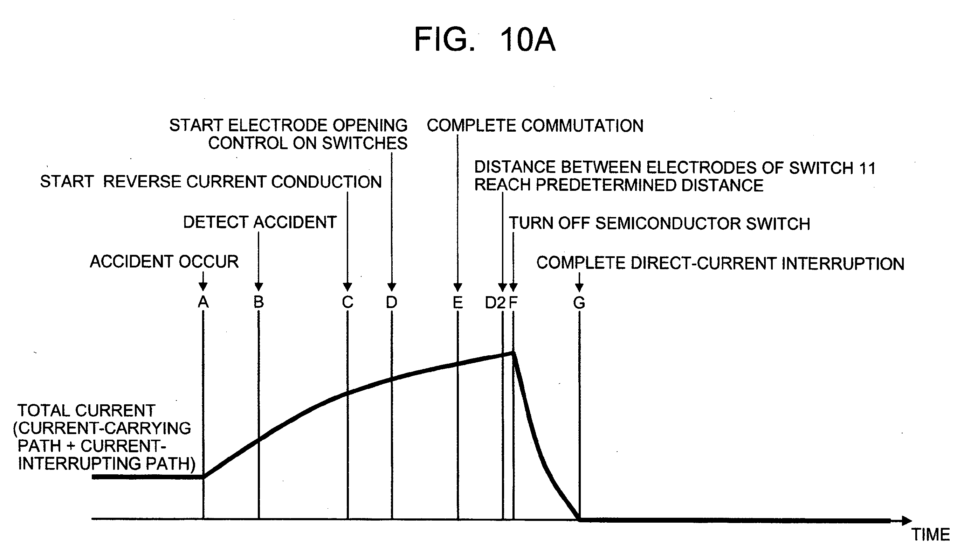

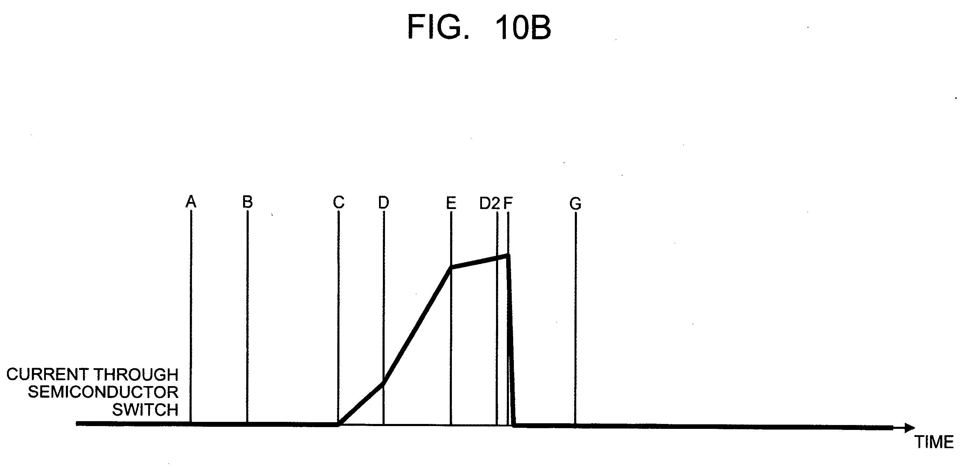

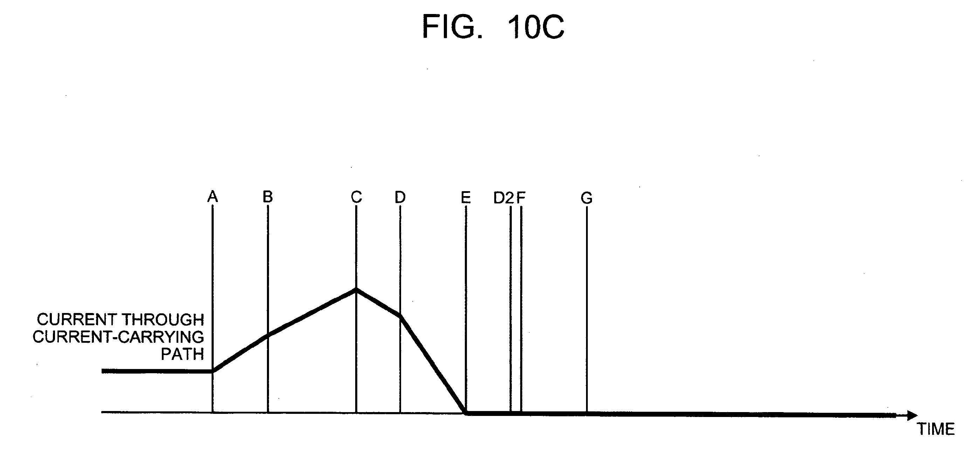

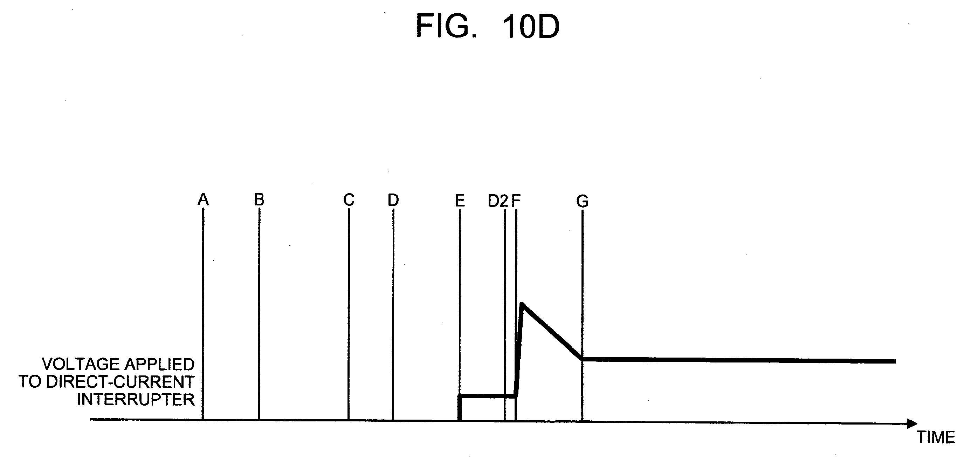

Next, Embodiment 7 will be explained referring to Figs. 10A, 10B, 10C, 10D. Figs. 10A, 10B, 10C, 10D illustrate altered timings for explaining the operations of the direct-current interrupter illustrated in Fig. 1, different from those illustrated in Figs. 5A, 5B, 5C, 5D to Figs. 8A, 8B, 8C, 8D. This embodiment may also be recognized to have a physical configuration being almost the same as that illustrated in Fig. 1, Fig. 2, but has timings of control by the control unit 50 slightly different from those illustrated in Figs. 4A, 4B, 4C, 4D to Figs. 8A, 8B, 8C, 8D. Therefore, overlapped description thereof will be omitted, and points different in comparison with Figs. 4A, 4B, 4C, 4D to Figs. 8A, 8B, 8C, 8D will be mainly explained below.

This embodiment performs control in consideration of Time D2 when the distance between the electrodes of the switch 11 reaches a predetermined distance, Time D2 being estimated from Time D when the electrode opening control is started on the switch 11. The ON/OFF of the semiconductor switch 31 is controlled by the control unit 50 so that the semiconductor switch 31 is controlled to switch to the off-state at a time point later then Time D2 (its timing is Time F).

Such control causes the high voltage application to the direct-current interrupter after a state where the withstand voltage property of the switch 11 is sufficiently ensured (its period is after Time F), leading to a very preferable result in terms of operation of the switch 11.

### (Embodiment 8)

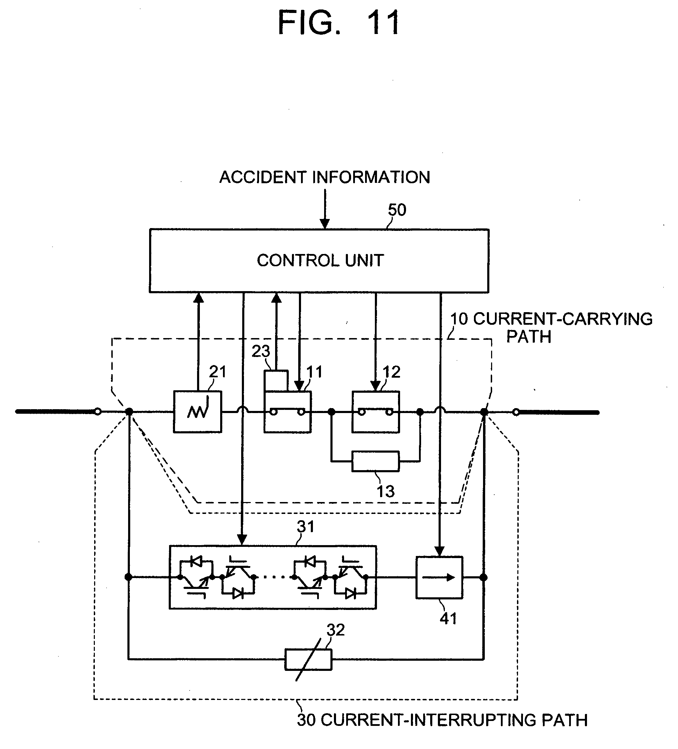

Fig. 11 illustrates a direct-current interrupter in Embodiment 8 being an example for implementing the timing chart illustrated in Figs. 10A, 10B, 10C, 10D. Components which are the same as or corresponding to those illustrated in Fig. 1 are given the same reference numerals in Fig. 11, and description thereof will be omitted. The difference of the configuration illustrated in Fig. 11 from that illustrated in Fig. 1 is that an interelectrode distance detecting unit 23 that detects the distance of the electrodes of the switch 11 and communicates it to the control unit 50 is provided at the switch 11. The other configuration is the same as that illustrated in Fig. 1.

This embodiment is the same in concept as the embodiment explained referring to Figs. 10A, 10B, 10C, 10D. Though Time D2 when the distance between the electrodes of the switch 11 reaches the predetermined distance is estimated from Time D when the electrode opening control is started on the switch 11 in the explanation for Figs. 10A, 10B, 10C, 10D, the interelectrode distance of the switch 11 is communicated by the interelectrode distance detecting unit 23 to the control unit 50, based on which the control unit 50 can recognize Time D2. The timings thereafter are the same as those in the explanation for Figs. 10A, 10B, 10C, 10D. The effects are the same as those in the explanation for Figs. 10A, 10B, 10C, 10D.

As has been described above, according to the direct-current interrupter of each embodiment, the power loss at normal time can be greatly reduced because the switch using the semiconductor switch is not used in the current-carrying path 10. Further, since the current source 41 is inserted in the current-interrupting path 30, it is possible to forcibly and quickly commute the current through the current-carrying path 10 to the side of the current-interrupting path 30 as the current to be interrupted. Accordingly, it becomes possible to decrease the value of the current to be interrupted by the current-interrupting path 30 so as to avoid an increase in size of the interrupter.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A direct-current interrupter comprising:
a current-carrying path (10) comprising a first switch (11) and a second switch (12) connected in series and a resistor (13) connected in parallel to the second switch, the first switch having a predetermined first withstand voltage property and switching between conduction and non-conduction of current by using no semiconductor switch, the second switch having a second withstand voltage property lower in withstand voltage property than the first withstand voltage property and switching between conduction and non-conduction of current by using no semiconductor switch, and the resistor protecting the second switch from a voltage to be applied to the second switch; and
a current-interrupting path (30) connected in parallel to the current-carrying path and comprising a semiconductor switch (31) and a current source (41) connected in series and a non-linear resistor (32) connected in parallel to a series connection of the semiconductor switch and the current source.

2. The direct-current interrupter according to claim 1,
wherein the first switch is a gas switch.

3. The direct-current interrupter according to claim 1,
wherein the second switch is a vacuum switch.

4. The direct-current interrupter according to claim 1, further comprising:
a first control unit (50) connected to the first switch, the unit controlling opening/closing of electrodes of the first switch;
a second control unit (50) connected to the second switch, the unit controlling opening/closing of electrodes of the second switch;
a third control unit (50) connected to the current source and the first and second control units, the third control unit controlling an output current of the current source and communicating a control state for the current source to the first and second control units; and
a detecting unit (21) provided in the current-carrying path, the unit detecting a current-carrying path current being a current flowing through the current-carrying path and communicating the current-carrying path current to the first, second, and third control units,
wherein the third control unit has a function of controlling the output current of the current source so that the current-carrying path current is reduced to a predetermined threshold current value or less close to zero, and
wherein the first or second control unit has a function of starting electrode opening control on the first or second switch after the current-carrying path current is reduced to the threshold current value or less by the third control unit.

5. The direct-current interrupter according to claim 3,
wherein the second switch is a vacuum switch having flat plate electrodes.

6. The direct-current interrupter according to claim 1, further comprising:
a first control unit (50) connected to the first switch, the unit controlling opening/closing of electrodes of the first switch;
a second control unit (50) connected to the second switch, the unit controlling opening/closing of electrodes of the second switch; and
a third control unit (50) connected to the current source and the first and second control units, the third control unit controlling an output current of the current source and communicating a control state for the current source to the first and second control units,
wherein the third control unit has a function of performing control to gradually increase the output current of the current source from zero, and
wherein the first or second control unit has a function of starting electrode opening control on the first or second switch in a middle that the output current of the current source is gradually increased by the third control unit or at a point in time before the output current of the current source is gradually increased by the third control unit.

7. The direct-current interrupter according to claim 3,
wherein the second switch is a vacuum switch having vertical magnetic field electrodes.

8. The direct-current interrupter according to claim 1, further comprising:
a first control unit (50) connected to the first switch, the unit controlling opening/closing of electrodes of the first switch;
a second control unit (50) connected to the second switch, the unit controlling opening/closing of electrodes of the second switch;
a third control unit (50) connected to the current source and the first and second control units, the third control unit controlling an output current of the current source and communicating a control state for the current source to the first and second control units and receiving a control state for the second switch by the second control unit from the second control unit; and
a detecting unit (21) provided in the current-carrying path, the unit detecting a current-carrying path current being a current flowing through the current-carrying path and communicating the current-carrying path current to the third control unit,
wherein the third control unit has a first function of performing control to gradually increase the output current of the current source from zero until a value of the current-carrying path current is reduced to zero, and a second function of controlling the output current of the current source so as to keep the value of the current-carrying path current at zero after the value of the current-carrying path current is reduced to zero,
wherein the first or second control unit has a function of starting electrode opening control on the first or second switch respectively in a middle that the output current of the current source is controlled by the third control unit to gradually increase, and
wherein the third control unit further has a third function of adjusting a degree of a gradual increase in the output current of the current source so that the value of the current-carrying path current is reduced to zero after a lapse of a predetermined time after the electrode opening control on the second switch is started by the second control unit.

9. The direct-current interrupter according to claim 1, further comprising:
a first control unit (50) connected to the first switch, the unit controlling opening/closing of electrodes of the first switch;
a second control unit (50) connected to the second switch, the unit controlling opening/closing of electrodes of the second switch;
a third control unit (50) connected to the current source and the first and second control units, the third control unit controlling an output current of the current source and communicating a control state for the current source to the first and second control units;
a first detecting unit (21) provided in the current-carrying path, the unit detecting a current-carrying path current being a current flowing through the current-carrying path and communicating the current-carrying path current to the third control unit; and
a second detecting unit (23) provided at the first switch, the unit detecting a distance of the electrodes of the second switch and communicating the distance to the third control unit,
wherein the third control unit has a first function of performing control to gradually increase the output current of the current source from zero until a value of the current-carrying path current is reduced to zero, and a second function of controlling the output current of the current source so as to keep the value of the current-carrying path current at zero after the value of the current-carrying path current is reduced to zero,
wherein the first or second control unit has a function of starting electrode opening control on the first or second switch respectively in a middle that the output current of the current source is controlled by the third control unit to gradually increase, and
wherein the third control unit further has a third function of adjusting a degree of a gradual increase in the output current of the current source so that the value of the current-carrying path current is reduced to zero after the distance of the electrodes of the second switch becomes a predetermined distance.

10. The direct-current interrupter according to claim 1, further comprising:
a first control unit (50) connected to the first switch, the unit controlling opening/closing of electrodes of the first switch;
a second control unit (50) onnected to the second switch, the unit controlling opening/closing of electrodes of the second switch;
a third control unit (50) connected to a semiconductor switch included in the current-interrupting path and to the first control unit, the third control unit controlling the semiconductor switch to switch between ON and OFF and receiving a control state for the first switch by the first control unit from the first control unit;
a fourth control unit (50) connected to the current source and the first and second control units, the fourth control unit controlling an output current of the current source and communicating a control state for the current source to the first and second control units; and
a detecting unit (21) provided in the current-carrying path, the unit detecting a current-carrying path current being a current flowing through the current-carrying path and communicating the current-carrying path current to the fourth control unit,
wherein the fourth control unit has a first function of performing control to gradually increase the output current of the current source from zero until a value of the current-carrying path current is reduced to zero, and a second function of controlling the output current of the current source so as to keep the value of the current-carrying path current at zero after the value of the current-carrying path current is reduced to zero,
wherein the first or second control unit has a function of starting electrode opening control on the first or second switch respectively in a middle that the output current of the current source is controlled by the fourth control unit to gradually increase, and
wherein the third control unit has a function of controlling the semiconductor switch to switch to OFF after a lapse of a predetermined time after the electrode opening control on the first switch is started by the first control unit.

11. The direct-current interrupter according to claim 1, further comprising:
a first control unit (50) connected to the first switch, the unit controlling opening/closing of electrodes of the first switch;
a second control unit (50) connected to the second switch, the unit controlling opening/closing of electrodes of the second switch;
a third control unit (50) connected to a semiconductor switch included in the current-interrupting path, the third control unit controlling the semiconductor switch to switch between ON and OFF;
a fourth control unit (50) connected to the current source and the first and second control units, the fourth unit controlling an output current of the current source and communicating a control state for the current source to the first and second control units;
a first detecting unit (21) provided in the current-carrying path, the unit detecting a current-carrying path current being a current flowing through the current-carrying path and communicating the current-carrying path current to the fourth control unit; and
a second detecting unit (23) provided at the first switch, the unit detecting a distance of the electrodes of the first switch and communicating the distance to the third control unit,
wherein the fourth control unit has a first function of performing control to gradually increase the output current of the current source from zero until a value of the current-carrying path current is reduced to zero, and a second function of controlling the output current of the current source so as to keep the value of the current-carrying path current at zero after the value of the current-carrying path current is reduced to zero,
wherein the first or second control unit has a function of starting electrode opening control on the first or second switch respectively in a middle that the output current of the current source is controlled by the fourth control unit to gradually increase, and
wherein the third control unit has a function of controlling the semiconductor switch to switch to OFF after the distance of the electrodes of the first switch becomes a predetermined distance.

12. A direct-current interrupting method by a direct-current interrupter, the direct-current interrupter comprising: a current-carrying path (10) comprising a first switch (11) and a second switch (12) connected in series and a resistor (13) connected in parallel to the second switch, the first switch having a predetermined first withstand voltage property and switching between conduction and non-conduction of current by using no semiconductor switch, the second switch having a second withstand voltage property lower in withstand voltage property than the first withstand voltage property and switching between conduction and non-conduction of current by using no semiconductor switch, and the resistor protecting the second switch from a voltage to be applied to the second switch; and a current-interrupting path (30) connected in parallel to the current-carrying path and comprising a semiconductor switch (31) and a current source (41) connected in series and a non-linear resistor (32) connected in parallel to a series connection of the semiconductor switch and the current source, the direct-current interrupting method comprising:
detecting a current-carrying path current being a current flowing through the current-carrying path;
controlling an output current of the current source so that the current-carrying path current is reduced to a predetermined threshold current value or less close to zero;
starting electrode opening control on the first or second switch after the current-carrying path current is reduced to the threshold current value or less; and
controlling the semiconductor switch to switch to OFF at least after a point in time of the electrode opening control on the first or second switch.

## Patentansprüche

1. Gleichstromunterbrecher, der umfasst:
einen Strom führenden Pfad (10), der einen ersten Schalter (11) und einen zweiten Schalter (12), die in Reihe miteinander verbunden sind, und einen Widerstand (13), der mit dem zweiten Schalter parallel verbunden ist, umfasst, wobei der erste Schalter eine vorgegebene erste Spannungsfestigkeitseigenschaft aufweist und unter Nicht-Verwendung eines Halbleiterschalters zwischen einer Leitung und Nicht-Leitung von Strom schaltet, wobei der zweite Schalter eine zweite Spannungsfestigkeitseigenschaft aufweist, die kleiner als die erste Spannungsfestigkeitseigenschaft ist, und wobei er zwischen Leitung und Nicht-Leitung von Strom unter Nicht-Verwendung eines Halbleiterschalters schaltet, und wobei der Widerstand den zweiten Schalter davor schützt, dass eine Spannung an den zweiten Schalter angelegt wird; und
einen Strom unterbrechenden Pfad (30), der mit dem Strom führenden Pfad parallel verbunden ist und einen Halbleiterschalter (31) und eine Stromquelle (41), die in Reihe verbunden sind, und einen nicht-linearen Widerstand (32), der parallel zu der Serienverbindung des Halbleiterschalters und der Stromquelle verbunden ist, umfasst.

2. Gleichstromunterbrecher nach Anspruch 1,
wobei der erste Schalter ein Gasschalter ist.

3. Gleichstromunterbrecher nach Anspruch 1,
wobei der zweite Schalter ein Vakuumschalter ist.

4. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit der Stromquelle und mit der ersten und zweiten Steuereinheit verbunden ist, wobei die dritte Steuereinheit einen Ausgabestrom der Stromquelle steuert und einen Steuerzustand für die Stromquelle an die erste und zweite Steuereinheit kommuniziert; und
eine Detektionseinheit (21), die in dem Strom führenden Pfad bereitgestellt ist, wobei die Einheit einen Strom des Strom führenden Pfads detektiert, der ein Strom ist, der durch den Strom führenden Pfad fließt, und den Strom des Strom führenden Pfads an die erste, zweite und dritte Steuereinheit kommuniziert,
wobei die dritte Steuereinheit eine Funktion des Steuerns des Ausgabestroms der Stromquelle derart aufweist, dass der Strom des Strom führenden Pfads auf einen vorgegebenen Schwellenwert eines Stromwerts oder auf einen Wert weniger nahe bei Null vermindert wird, und
wobei die erste oder zweite Steuereinheit eine Funktion aufweist, die Steuerung der Elektrodenöffnung auf dem ersten oder zweiten Schalter zu starten, nachdem der Strom des Strom führenden Pfads auf den vorgegebenen Schwellenwert eines Stromwerts oder weniger durch die dritte Steuereinheit vermindert wird.

5. Gleichstromunterbrecher nach Anspruch 3,
wobei der zweite Schalter ein Vakuumschalter mit flachen Plattenelektroden ist.

6. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit der Stromquelle und mit der ersten und zweiten Steuereinheit verbunden ist, wobei die dritte Steuereinheit einen Ausgabestrom der Stromquelle steuert und einen Steuerzustand für die Stromquelle an die erste und zweite Steuereinheit kommuniziert; und
wobei die dritte Steuereinheit eine Funktion des Durchführens des Steuerns aufweist, um stufenweise den Ausgabestrom der Stromquelle von Null aus zu erhöhen, und
wobei die erste oder zweite Steuereinheit eine Funktion aufweist, die Steuerung der Elektrodenöffnung auf dem ersten oder zweiten Schalter in einer Mitte zu starten, dass der Ausgabestrom der Stromquelle stufenweise durch die dritte Steuereinheit oder zu einem Zeitpunkt erhöht wird, bevor der Ausgabestrom der Stromquelle stufenweise durch die dritte Steuereinheit erhöht wird.

7. Gleichstromunterbrecher nach Anspruch 3,
wobei der zweite Schalter ein Vakuumschalter mit vertikalen magnetischen Feldelektroden ist.

8. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit der Stromquelle und mit der ersten und zweiten Steuereinheit verbunden ist, wobei die dritte Steuereinheit einen Ausgabestrom der Stromquelle steuert und einen Steuerzustand für die Stromquelle an die erste und zweite Steuereinheit kommuniziert und durch die zweite Steuereinheit von der zweiten Steuereinheit einen Steuerzustand für den zweiten Schalter empfängt; und
eine Detektionseinheit (21), die in dem Strom führenden Pfad bereitgestellt ist, wobei die Einheit einen Strom des Strom führenden Pfads detektiert, der ein Strom ist, der durch den Strom führenden Pfad fließt, und den Strom des Strom führenden Pfads an die dritte Steuereinheit kommuniziert,
wobei die dritte Steuereinheit eine erste Funktion des Durchführens des Steuerns aufweist, um stufenweise den Ausgabestrom der Stromquelle von Null aus so lange zu erhöhen, bis ein Wert des Stroms des Strom führenden Pfads auf Null vermindert ist, und eine zweite Funktion aufweist, um den Ausgabestrom der Stromquelle zu steuern, um den Wert des Stroms des Strom führenden Pfads bei Null zu halten, nachdem der Wert des Stroms des Strom führenden Pfads auf Null vermindert ist,
wobei die erste oder zweite Steuereinheit eine Funktion aufweist, die Steuerung der Elektrodenöffnung auf dem ersten bzw. zweiten Schalter in einer Mitte zu starten, dass der Ausgabestrom der Stromquelle von der dritten Steuereinheit gesteuert wird, um ihn stufenweise zu erhöhen, und
wobei die dritte Steuereinheit ferner eine dritte Funktion aufweist, den Grad einer stufenweisen Erhöhung des Ausgabestroms der Stromquelle derart anzupassen, dass nach einem Ablauf einer vorgegebenen Zeit, nachdem die Steuerung der Elektrodenöffnung auf dem zweiten Schalter durch die zweite Steuereinheit gestartet ist, der Wert des Stroms des Strom führenden Pfads auf Null vermindert wird.

9. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit der Stromquelle und mit der ersten und zweiten Steuereinheit verbunden ist, wobei die dritte Steuereinheit einen Ausgabestrom der Stromquelle steuert und einen Steuerzustand für die Stromquelle an die erste und zweite Steuereinheit kommuniziert;
eine erste Detektionseinheit (21), die in dem Strom führenden Pfad bereitgestellt ist, wobei die Einheit einen Strom des Strom führenden Pfads detektiert, der ein Strom ist, der durch den Strom führenden Pfad fließt, und den Strom des Strom führenden Pfads an die dritte Steuereinheit kommuniziert; und
eine zweite Detektionseinheit (23), die an dem ersten Schalter bereitgestellt ist, wobei die Einheit einen Abstand der Elektroden des zweiten Schalters detektiert und den Abstand an die dritte Steuereinheit kommuniziert,
wobei die dritte Steuereinheit eine erste Funktion des Durchführens des Steuerns aufweist, um stufenweise den Ausgabestrom der Stromquelle von Null aus so lange zu erhöhen, bis ein Wert des Stroms des Strom führenden Pfads auf Null vermindert ist, und eine zweite Funktion aufweist, um den Ausgabestrom der Stromquelle zu steuern, um den Wert des Stroms des Strom führenden Pfads bei Null zu halten, nachdem der Wert des Stroms des Strom führenden Pfads auf Null vermindert ist,
wobei die erste oder zweite Steuereinheit eine Funktion aufweist, die Steuerung der Elektrodenöffnung auf dem ersten bzw. zweiten Schalter in einer Mitte zu starten, dass der Ausgabestrom der Stromquelle von der dritten Steuereinheit gesteuert wird, um ihn stufenweise zu erhöhen, und
wobei die dritte Steuereinheit ferner eine dritte Funktion aufweist, den Grad einer stufenweisen Erhöhung des Ausgabestroms der Stromquelle derart anzupassen, dass der Wert des Stroms des Strom führenden Pfads auf Null vermindert wird, nachdem der Abstand der Elektroden des zweiten Schalters einen vorgegebenen Abstand annimmt.

10. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit einem Halbleiterschalter, der in dem Strom unterbrechenden Pfad angeordnet ist, und mit der ersten Steuereinheit verbunden ist, wobei die dritte Steuereinheit den Halbleiterschalter steuert, um zwischen AN (ON) und AUS (OFF) hin und her zu schalten, und um einen Steuerzustand für den ersten Schalter durch die erste Steuereinheit von der ersten Steuereinheit zu empfangen;
eine vierte Steuereinheit (50), die mit der Stromquelle und mit der ersten und zweiten Steuereinheit verbunden ist, wobei die vierte Steuereinheit einen Ausgabestrom der Stromquelle steuert und einen Steuerzustand für die Stromquelle an die erste und zweite Steuereinheit kommuniziert; und
eine Detektionseinheit (21), die in dem Strom führenden Pfad bereitgestellt ist, wobei die Einheit einen Strom des Strom führenden Pfads detektiert, der ein Strom ist, der durch den Strom führenden Pfad fließt, und den Strom des Strom führenden Pfads an die vierte Steuereinheit kommuniziert;
wobei die vierte Steuereinheit eine erste Funktion des Durchführens des Steuerns aufweist, um stufenweise den Ausgabestrom der Stromquelle von Null aus so lange zu erhöhen, bis ein Wert des Stroms des Strom führenden Pfads auf Null vermindert ist, und eine zweite Funktion aufweist, um den Ausgabestrom der Stromquelle zu steuern, um den Wert des Stroms des Strom führenden Pfads bei Null zu halten, nachdem der Wert des Stroms des Strom führenden Pfads auf Null vermindert ist,
wobei die erste oder zweite Steuereinheit eine Funktion aufweist, die Steuerung der Elektrodenöffnung auf dem ersten bzw. zweiten Schalter in einer Mitte zu starten, dass der Ausgabestrom der Stromquelle von der vierten Steuereinheit gesteuert wird, um ihn stufenweise zu erhöhen, und
wobei die dritte Steuereinheit eine Funktion aufweist, den Halbleiterschalter zu steuern, um nach einem Ablauf einer vorgegebenen Zeit, nachdem die Steuerung der Elektrodenöffnung auf dem ersten Schalter durch die erste Steuereinheit gestartet ist, auf AUS (OFF) zu schalten.

11. Gleichstromunterbrecher nach Anspruch 1, der ferner umfasst:
eine erste Steuereinheit (50), die mit dem ersten Schalter verbunden ist, wobei die Einheit das Öffnen/Schließen von Elektroden des ersten Schalters steuert;
eine zweite Steuereinheit (50), die mit dem zweiten Schalter verbunden ist, wobei die Einheit das Öffnen/Schließen von Elektroden des zweiten Schalters steuert;
eine dritte Steuereinheit (50), die mit einem Halbleiterschalter, der in dem Strom unterbrechenden Pfad angeordnet ist, verbunden ist, wobei die dritte Steuereinheit den Halbleiterschalter steuert, um zwischen AN (ON) und AUS (OFF) hin und her zu schalten;
eine vierte Steuereinheit (50), die mit der Stromquelle und mit der ersten und zweiten Steuereinheit verbunden ist, wobei die vierte Steuereinheit einen Ausgabestrom der Stromquelle steuert und einen Steuerzustand für die Stromquelle an die erste und zweite Steuereinheit kommuniziert;
eine erste Detektionseinheit (21), die in dem Strom führenden Pfad bereitgestellt ist, wobei die Einheit einen Strom des Strom führenden Pfads detektiert, der ein Strom ist, der durch den Strom führenden Pfad fließt, und den Strom des Strom führenden Pfads an die vierte Steuereinheit kommuniziert; und
eine zweite Detektionseinheit (23), die an dem ersten Schalter bereitgestellt ist, wobei die Einheit einen Abstand der Elektroden des ersten Schalters detektiert und den Abstand an die dritte Steuereinheit kommuniziert,
wobei die vierte Steuereinheit eine erste Funktion des Durchführens des Steuerns aufweist, um stufenweise den Ausgabestrom der Stromquelle von Null aus so lange zu erhöhen, bis ein Wert des Stroms des Strom führenden Pfads auf Null vermindert ist, und eine zweite Funktion aufweist, um den Ausgabestrom der Stromquelle zu steuern, um den Wert des Stroms des Strom führenden Pfads bei Null zu halten, nachdem der Wert des Stroms des Strom führenden Pfads auf Null vermindert ist,
wobei die erste oder zweite Steuereinheit eine Funktion aufweist, die Steuerung der Elektrodenöffnung auf dem ersten bzw. zweiten Schalter in einer Mitte zu starten, dass der Ausgabestrom der Stromquelle von der vierten Steuereinheit gesteuert wird, um ihn stufenweise zu erhöhen, und
wobei die dritte Steuereinheit eine Funktion aufweist, den Halbleiterschalter zu steuern, um ihn auf AUS (OFF) zu schalten, nachdem der Abstand der Elektroden des ersten Schalters einen vorgegebenen Abstand annimmt.

12. Verfahren zum Unterbrechen eines Gleichstroms durch einen Gleichstromunterbrecher, wobei der Gleichstromunterbrecher umfasst: einen Strom führenden Pfad (10), der einen ersten Schalter (11) und einen zweiten Schalter (12), die in Reihe miteinander verbunden sind, und einen Widerstand (13), der mit dem zweiten Schalter parallel verbunden ist, umfasst, wobei der erste Schalter eine vorgegebene erste Spannungsfestigkeitseigenschaft aufweist und unter Nicht-Verwendung eines Halbleiterschalters zwischen einer Leitung und Nicht-Leitung von Strom schaltet, wobei der zweite Schalter eine zweite Spannungsfestigkeitseigenschaft aufweist, die kleiner als die erste Spannungsfestigkeitseigenschaft ist, und wobei er zwischen Leitung und Nicht-Leitung von Strom unter Nicht-Verwendung eines Halbleiterschalters schaltet, und wobei der Widerstand den zweiten Schalter davor schützt, dass eine Spannung an den zweiten Schalter angelegt wird; und einen Strom unterbrechenden Pfad (30), der mit dem Strom führenden Pfad parallel verbunden ist und einen Halbleiterschalter (31) und eine Stromquelle (41), die in Reihe verbunden sind, und einen nicht-linearen Widerstand (32), der parallel zu der Serienverbindung des Halbleiterschalters und der Stromquelle verbunden ist, umfasst, wobei das Verfahren zum Unterbrechen eines Gleichstroms umfasst:
Detektieren eines Stroms eines Strom führenden Pfads, der ein Strom ist, der durch den Strom führenden Pfad fließt;
Steuern eines Ausgabestroms der Stromquelle derart, dass der Strom des Strom führenden Pfads auf einen vorgegebenen Schwellenwert eines Stromwerts oder auf einen Wert weniger nahe bei Null vermindert wird;
Starten der Steuerung der Elektrodenöffnung auf dem ersten oder zweiten Schalter, nachdem der Strom des Strom führenden Pfads auf den Schwellenwert eines Stromwerts oder weniger vermindert ist; und
Steuern des Halbleiterschalters, um mindestens nach einem Zeitpunkt der Steuerung der Elektrodenöffnung auf dem ersten Schalter oder zweiten Schalter auf AUS (OFF) zu schalten.

## Revendications

1. Interrupteur de courant continu comprenant :
un chemin porteur de courant (10) comprenant un premier commutateur (11) et un second commutateur (12) reliés en série et une résistance (13) reliée en parallèle au second commutateur, le premier commutateur ayant une première propriété prédéterminée de tension de tenue, et commutant entre une conduction et une non-conduction de courant en n'utilisant aucun commutateur à semi-conducteur, le second commutateur ayant une seconde propriété de tension de tenue plus faible en ce qui concerne la propriété de tension de tenue que la première propriété de tension de tenue, et commutant entre une conduction et une non-conduction de courant en n'utilisant aucun commutateur à semi-conducteur, et la résistance protégeant le second commutateur d'une tension à appliquer au second commutateur; et
un chemin d'interruption de courant (30) relié en parallèle au chemin porteur de courant, et comprenant un commutateur à semi-conducteur (31) et une source de courant (41) reliés en série, et une résistance non linéaire (32) reliée en parallèle à une connexion en série du commutateur à semi-conducteur et de la source de courant.

2. Interrupteur de courant continu selon la revendication 1,
dans lequel le premier commutateur est un commutateur à gaz.

3. Interrupteur de courant continu selon la revendication 1,
dans lequel le second commutateur est un commutateur à vide.

4. Interrupteur de courant continu selon la revendication 1, comprenant en outre :
une première unité de commande (50) reliée au premier commutateur, l'unité commandant l'ouverture / la fermeture d'électrodes du premier commutateur;
une deuxième unité de commande (50) reliée au second commutateur, l'unité commandant l'ouverture / la fermeture d'électrodes du second commutateur;
une troisième unité de commande (50) reliée à la source de courant et aux première et deuxième unités de commande, la troisième unité de commande commandant un courant de sortie de la source de courant et communiquant un état de commande pour la source de courant aux première et deuxième unités de commande ; et
une unité de détection (21) disposée dans le chemin porteur de courant, l'unité détectant un courant de chemin porteur de courant étant un courant s'écoulant par le chemin porteur de courant, et communiquant le courant de chemin porteur de courant aux première, deuxième et troisième unités de commande,
dans lequel la troisième unité de commande a une fonction de commande du courant de sortie de la source de courant de sorte que le courant de chemin porteur de courant est réduit à une valeur de courant de seuil prédéterminée ou moins, proche de zéro, et
dans lequel la première ou deuxième unité de commande a une fonction de démarrage de commande d'ouverture d'électrodes sur le premier ou second commutateur après que le courant de chemin porteur de courant ait été réduit à la valeur de courant de seuil ou moins par la troisième unité de commande.

5. Interrupteur de courant continu selon la revendication 3,
dans lequel le second commutateur est un commutateur à vide ayant des électrodes en plaques plates.

6. Interrupteur de courant continu selon la revendication 1, comprenant en outre :
une première unité de commande (50) reliée au premier commutateur, l'unité commandant l'ouverture / la fermeture d'électrodes du premier commutateur;
une deuxième unité de commande (50) reliée au second commutateur, l'unité commandant l'ouverture / la fermeture d'électrodes du second commutateur; et
une troisième unité de commande (50) reliée à la source de courant et aux première et deuxième unités de commande, la troisième unité de commande commandant un courant de sortie de la source de courant, et communiquant un état de commande pour la source de courant aux première et deuxième unités de commande,
dans lequel la troisième unité de commande a une fonction d'effectuer une commande pour progressivement augmenter le courant de sortie de la source de courant à partir du zéro, et
dans lequel la première ou deuxième unité de commande a une fonction de démarrage de commande d'ouverture d'électrodes sur le premier ou second commutateur à un moment où le courant de sortie de la source de courant est progressivement augmenté par la troisième unité de commande, ou à un point dans le temps avant que le courant de sortie de la source de courant ne soit progressivement augmenté par la troisième unité de commande.

7. Interrupteur de courant continu selon la revendication 3,
dans lequel le second commutateur est un commutateur à vide ayant des électrodes à champ magnétique verticales.

8. Interrupteur de courant continu selon la revendication 1, comprenant en outre :
une première unité de commande (50) reliée au premier commutateur, l'unité commandant l'ouverture / la fermeture d'électrodes du premier commutateur ;
une deuxième unité de commande (50) reliée au second commutateur, l'unité commandant l'ouverture / la fermeture d'électrodes du second commutateur;
une troisième unité de commande (50) reliée à la source de courant et aux première et deuxième unités de commande, la troisième unité de commande commandant un courant de sortie de la source de courant, et communiquant un état de commande pour la source de courant aux première et deuxième unités de commande, et recevant un état de commande pour le second commutateur par la deuxième unité de commande en provenance de la deuxième unité de commande ; et
une unité de détection (21) disposée dans le chemin porteur de courant, l'unité détectant un courant de chemin porteur de courant étant un courant s'écoulant par le chemin porteur de courant, et communiquant le courant de chemin porteur de courant à la troisième unité de commande,
dans lequel la troisième unité de commande a une première fonction d'effectuer une commande pour progressivement augmenter le courant de sortie de la source de courant à partir de zéro jusqu'à ce qu'une valeur du courant de chemin porteur de courant soit réduite à zéro, et une deuxième fonction de commande du courant de sortie de la source de courant afin de conserver la valeur du courant de chemin porteur de courant à zéro après que la valeur du courant de chemin porteur de courant ait été réduite à zéro,
dans lequel la première ou deuxième unité de commande a une fonction de démarrage de commande d'ouverture d'électrodes sur le premier ou second commutateur respectivement à un moment où le courant de sortie de la source de courant est commandé par la troisième unité de commande pour progressivement augmenter, et
dans lequel la troisième unité de commande a en outre une troisième fonction d'ajuster un degré d'une augmentation progressive du courant de sortie de la source de courant de sorte que la valeur du courant de chemin porteur de courant est réduite à zéro après un d'un laps de temps prédéterminé après que la commande d'ouverture d'électrodes sur le second commutateur ait été démarrée par la deuxième unité de commande.

9. Interrupteur de courant continu selon la revendication 1, comprenant en outre :
une première unité de commande (50) reliée au premier commutateur, l'unité commandant l'ouverture / la fermeture d'électrodes du premier commutateur;
une deuxième unité de commande (50) reliée au second commutateur, l'unité commandant l'ouverture / fermeture d'électrodes du second commutateur ;
une troisième unité de commande (50) reliée à la source de courant et aux première et deuxième unités de commande, la troisième unité de commande commandant un courant de sortie de la source de courant, et communiquant un état de commande pour la source de courant aux première et deuxième unités de commande ;
une première unité de détection (21) disposée dans le chemin porteur de courant, l'unité détectant un courant de chemin porteur de courant étant un courant s'écoulant par le chemin porteur de courant, et communiquant le courant de chemin porteur de courant à la troisième unité de commande ; et
une seconde unité de détection (23) disposée au niveau du premier commutateur, l'unité détectant une distance des électrodes du second commutateur, et communiquant la distance à la troisième unité de commande,
dans lequel la troisième unité de commande a une première fonction d'effectuer une commande pour progressivement augmenter le courant de sortie de la source de courant à partir de zéro jusqu'à ce qu'une valeur du courant de chemin porteur de courant soit réduite à zéro, et une deuxième fonction de commander le courant de sortie de la source de courant afin de conserver la valeur du courant de chemin porteur de courant à zéro après que la valeur du courant de chemin porteur de courant ait été réduite à zéro,
dans lequel la première ou deuxième unité de commande a une fonction de démarrage de commande d'ouverture d'électrodes sur le premier ou second commutateur respectivement à un moment où le courant de sortie de la source de courant est commandé par la troisième unité de commande pour progressivement augmenter, et
dans lequel la troisième unité de commande a en outre une troisième fonction d'ajuster un degré d'une augmentation progressive du courant de sortie de la source de courant de sorte que la valeur du courant de chemin porteur de courant est réduite à zéro après que la distance des électrodes du second commutateur soit devenue une distance prédéterminée.

10. Interrupteur de courant continu selon la revendication 1, comprenant en outre :
une première unité de commande (50) reliée au premier commutateur, l'unité commandant l'ouverture / la fermeture d'électrodes du premier commutateur;
une deuxième unité de commande (50) reliée au second commutateur, l'unité commandant l'ouverture / la fermeture d'électrodes du second commutateur;
une troisième unité de commande (50) reliée à un commutateur à semi-conducteur inclus dans le chemin d'interruption de courant et à la première unité de commande, la troisième unité de commande commandant le commutateur à semi-conducteur pour commuter entre MARCHE et ARRÊT, et recevant un état de commande pour le premier commutateur par la première unité de commande en provenance de la première unité de commande ;
une quatrième unité de commande (50) reliée à la source de courant et aux première et deuxième unités de commande, la quatrième unité de commande commandant un courant de sortie de la source de courant, et communiquant un état de commande pour la source de courant aux première et deuxième unités de commande ; et
une unité de détection (21) disposée dans le chemin porteur de courant, l'unité détectant un courant de chemin porteur de courant étant un courant s'écoulant par le chemin porteur de courant, et communiquant le courant de chemin porteur de courant à la quatrième unité de commande,
dans lequel la quatrième unité de commande a une première fonction d'effectuer une commande pour progressivement augmenter le courant de sortie de la source de courant à partir de zéro jusqu'à ce qu'une valeur du courant de chemin porteur de courant soit réduite à zéro, et une seconde fonction de commander le courant de sortie de la source de courant afin de conserver la valeur du courant de chemin porteur de courant à zéro après que la valeur du courant de chemin porteur de courant ait été réduite à zéro,
dans lequel la première ou deuxième unité de commande a une fonction de démarrage de commande d'ouverture d'électrodes sur le premier ou second commutateur respectivement à un moment où le courant de sortie de la source de courant est commandé par la quatrième unité de commande pour progressivement augmenter, et
dans lequel la troisième unité de commande a une fonction de commander le commutateur à semi-conducteur pour commuter à ARRÊT après un laps de temps prédéterminé après que la commande d'ouverture d'électrodes sur le premier commutateur ait été démarrée par la première unité de commande.

11. Interrupteur de courant continu selon la revendication 1, comprenant en outre :
une première unité de commande (50) reliée au premier commutateur, l'unité commandant l'ouverture / la fermeture d'électrodes du premier commutateur;
une deuxième unité de commande (50) reliée au second commutateur, l'unité commandant l'ouverture / la fermeture d'électrodes du second commutateur;
une troisième unité de commande (50) reliée à un commutateur à semi-conducteur inclus dans le chemin d'interruption de courant, la troisième unité de commande commandant le commutateur à semi-conducteur pour commuter entre MARCHE et ARRÊT;
une quatrième unité de commande (50) reliée à la source de courant et aux première et deuxième unités de commande, la quatrième unité commandant un courant de sortie de la source de courant, et communiquant un état de commande pour la source de courant au première et deuxième unités de commande ;
une première unité de détection (21) disposée dans le chemin porteur de courant, l'unité détectant un courant de chemin porteur de courant étant un courant s'écoulant par le chemin porteur de courant, et communiquant le courant de chemin porteur de courant à la quatrième unité de commande ; et
une seconde unité de détection (23) disposée au niveau du premier commutateur, l'unité détectant une distance des électrodes du premier commutateur, et communiquant la distance jusqu'à la troisième unité de commande,
dans lequel la quatrième unité de commande a une première fonction d'effectuer une commande pour progressivement augmenter le courant de sortie de la source de courant à partir de zéro jusqu'à ce qu'une valeur du courant de chemin porteur de courant soit réduite à zéro, et une seconde fonction de commander le courant de sortie de la source de courant afin de conserver la valeur du courant de chemin porteur de courant à zéro après que la valeur du courant de chemin porteur de courant ait été réduite à zéro,
dans lequel la première ou deuxième unité de commande a une fonction de démarrage de commande d'ouverture d'électrodes sur le premier ou second commutateur respectivement à un moment où le courant de sortie de la source de courant est commandé par la quatrième unité de commande pour progressivement augmenter, et
dans lequel la troisième unité de commande a une fonction de commander le commutateur à semi-conducteur pour commuter à ARRÊT après que la distance des électrodes du premier commutateur soit devenue une distance prédéterminée.

12. Procédé d'interruption de courant continu par un interrupteur de courant continu, l'interrupteur de courant continu comprenant : un chemin porteur de courant (10) comprenant un premier commutateur (11) et un second commutateur (12) reliés en série, et une résistance (13) reliée en parallèle au second commutateur, le premier commutateur ayant une première propriété prédéterminée de tension de tenue et commutant entre une conduction et une non-conduction de courant en n'utilisant aucun commutateur à semi-conducteur, le second commutateur ayant une seconde propriété de tension de tenue plus faible en ce qui concerne la propriété de tension de tenue que la première propriété de tension de tenue, et commutant entre une conduction et une non-conduction de courant en n'utilisant aucun commutateur à semi-conducteur, et la résistance protégeant le second commutateur d'une tension à appliquer au second commutateur ; et un chemin d'interruption de courant (30) relié en parallèle au chemin porteur de courant, et comprenant un commutateur à semi-conducteur (31) et une source de courant (41) reliés en série, et une résistance non linéaire (32) reliée en parallèle à une connexion en série du commutateur à semi-conducteur et de la source de courant, le procédé d'interruption de courant continu comprenant :
la détection d'un courant de chemin porteur de courant étant un courant s'écoulant par le chemin porteur de courant;
la commande d'un courant de sortie de la source de courant de sorte que le courant de chemin porteur de courant est réduit à une valeur de courant de seuil prédéterminée ou moins, proche du zéro ;
le démarrage de la commande d'ouverture d'électrodes sur le premier ou second commutateur après que le courant de chemin porteur de courant ait été réduit à la valeur de courant de seuil ou moins ; et
la commande du commutateur à semi-conducteur pour commuter à ARRÊT au moins après un point dans le temps de la commande d'ouverture d'électrodes sur le premier ou second commutateur.
